Europäisches Patentamt

European Patent Office

Office européen des brevets

(19)

(11) **EP 0 616 714 B1**

(12) **FASCICULE DE BREVET EUROPEEN**

(45) Date de publication et mention
de la délivrance du brevet:
**13.05.1998 Bulletin 1998/20**

(21) Numéro de dépôt: **93922540.5**

(22) Date de dépôt: **08.10.1993**

(51) Int Cl.⁶: **G07F 7/10**

(86) Numéro de dépôt international:
**PCT/EP93/02773**

(87) Numéro de publication internationale:
**WO 94/09453 (28.04.1994 Gazette 1994/10)**

(54) **SYSTEME DE TRAITEMENT D'INFORMATIONS UTILISANT UN ENSEMBLE DE CARTES A MEMOIRE**

DATENVERARBEITUNG MIT EINEM SPEICHERKARTENSATZ

DATA PROCESSING SYSTEM USING A SET OF MEMORY CARDS

(84) Etats contractants désignés:
**AT BE CH DE DK ES FR GB GR IE IT LI LU MC NL PT SE**

(30) Priorité: **09.10.1992 FR 9212322**

(43) Date de publication de la demande:
**28.09.1994 Bulletin 1994/39**

(73) Titulaire: **NAGRA PLUS S.A.**
**CH-1033 Cheseaux-sur-Lausanne (CH)**

(72) Inventeur: **KUDELSKI, André**
**CH-1023 Crissier (CH)**

(74) Mandataire: **Cronin, Brian Harold John**
**c/o GRIFFES CONSULTING SA**
**70, route de Florissant**
**1206 Genève (CH)**

(56) Documents cités:
EP-A- 0 361 491          WO-A-91/08541
WO-A-92/13322

**Description**

DOMAINE TECHNIOUE

La présente invention concerne de façon générale un système destiné à gérer le stockage d'informations et à gérer l'exécution de programmes spécifiques au moyen de cartes à mémoire.

ETAT DE LA TECHNIOUE

On connait un grand nombre de systèmes de traitement d'information comprenant un ensemble de "cartes à mémoire", au moins une "station" ou "unité de gestion" et au moins un "réseau de communication" destiné à faire communiquer au moins une "carte à mémoire" avec au moins une station.

Dans la suite du texte, on appellera "carte à mémoire", ou carte à puce, toutes les sortes de cartes incluant un circuit électronique et/ou un élément passif permettant de stocker des informations numériques et permettant, en outre, éventuellement, d'effectuer des traitements logiques. Dans la suite du texte, on appellera toutes ces cartes, soit "carte à mémoire", soit plus simplement "carte".

Dans ces systèmes connus, on trouve des cartes à mémoire qui sont habituellement des cartes incluant chacune au moins un circuit intégré constituant un microcontrôleur ou microprocesseur incluant des mémoires de type ROM, RAM, EPROM et/ou EEPROM dont l'accès est contrôlé par un logiciel stocké dans le circuit intégré. Dans ces systèmes connus, on trouve aussi au moins une unité de gestion ou "station" qui est extérieure aux cartes à mémoire et qui dispose d'un droit pour effectuer des lectures et/ou des écritures dans au moins une zone (appelée par la suite "zone privée") de certaines cartes à mémoire ou de toutes les cartes à mémoire.

Dans la suite du texte, on appellera "station centrale" ou "unité de gestion" une telle station quand elle dispose du droit d'affecter des "zones privées" sur les cartes à mémoire et "station secondaire" une telle station quand elle ne dispose pas du droit d'affecter des zones privées.

Depuis que la carte à mémoire a vu le jour, un certain nombre d'applications utilisant cette technologie sont apparues.

Une première génération connue de cartes à mémoire faisait intervenir une station centrale capable d'inscrire des informations secrètes dans la carte, et un certain nombre de stations secondaires pouvaient consulter les informations non-critiques contenues dans la carte, c'est-à-dire les informations n'offrant pas la possibilité de révéler ou de supprimer des informations secrètes.

Une seconde génération connue de cartes à mémoire, principalement utilisée dans le domaine de la télévision à péage, prévoyait pour chaque carte un nombre variable de stations secondaires dont chacune pouvait disposer librement et exclusivement d'une zone privée contenue dans la carte. Dans le domaine de la télévision à péage, les stations secondaires sont par exemple des diffuseurs de programmes de télévision. En général, chaque station secondaire est constituée par un prestataire de services spécifique ou par un diffuseur de programmes de télévision spécifique.

Cette structure de carte à mémoire rend hermétique toute communication entre les différentes zones privées relatives aux différentes unités de gestion principales, de façon à assurer la sécurité du système. Ainsi, un diffuseur de programmes de télévision n'a en principe pas de droit d'accès, sur une carte, à une zone privée qui est affectée à un autre diffuseur de programmes de télévision. Pour chaque nouveau prestataire de services ou chaque nouveau diffuseur de programmes de télévision, il sera nécessaire d'ouvrir une nouvelle "zone privée" sur la carte.

Afin d'illustrer une telle situation, on peut considérer la situation suivante (volontairement simplifiée).

En admettant qu'un abonné de télévision à péage X désire souscrire à trois chaînes de télévision A, B et C, il devra prendre contact avec chacune de ces chaînes qui feront inscrire (par le signal vidéo transmis) les ordres d'ouverture des zones privées respectives dans la carte de l'abonné. La carte de l'abonné X disposera de 4 zones privées ouvertes sur la carte, à savoir une "zone émetteur" et les trois zones privées des trois chaînes A, B et C respectives. L'ouverture des zones privées sera effectuée par la station de gestion centrale qui est seule à disposer du droit d'ouvrir de nouvelles zones privées, autrement dit qui est seule à disposer du droit de gérer les ressources globales de la carte. Ce principe de gestion est actuellement utilisé dans la norme Eurocrypt de télévision à péage.

Ces cartes de deuxième génération connues présentent les inconvénients suivants.

Du fait de la mise en place de plusieurs systèmes de télévision à péage et de plusieurs systèmes de distribution d'informations, il se produit les limitations suivantes :

A. Les systèmes connus sont calqués sur les systèmes informatiques classiques, à savoir le découpage d'une partie de mémoire en plusieurs zones, chacune étant réservée à son utilisateur. Parallèlement, on considère que la station centrale (prestataire de service) accède de façon identique à chacune des cartes, comme cela est le cas pour un ordinateur qui se connecte avec son mot de passe sur sa machine.

B. Les modèles de gestion retenus sont calqués sur les possibilités qui existaient avant l'arrivée de la messagerie électronique. Le modèle n'a pas été revu en tenant compte des nouvelles possibilités offertes par l'existence d'un flux d'informations entre un émetteur de signal vidéo et chaque carte à mémoire contenue dans un décodeur présent chez un abonné de télévision à péage.

C. Les structures de distribution des informations se sont révélées en réalité beaucoup plus complexes que les modèles simples prévus à l'origine, compliquant et limitant passablement les possibilités de gestion.

D. Le fait d'avoir, en télévision à péage, un flux principalement unidirectionnel entre l'opérateur et la carte à mémoire, fait que l'on ne peut jamais être sûr que le message a bien été reçu, ce qui pose des difficultés opérationnelles difficiles à modéliser.

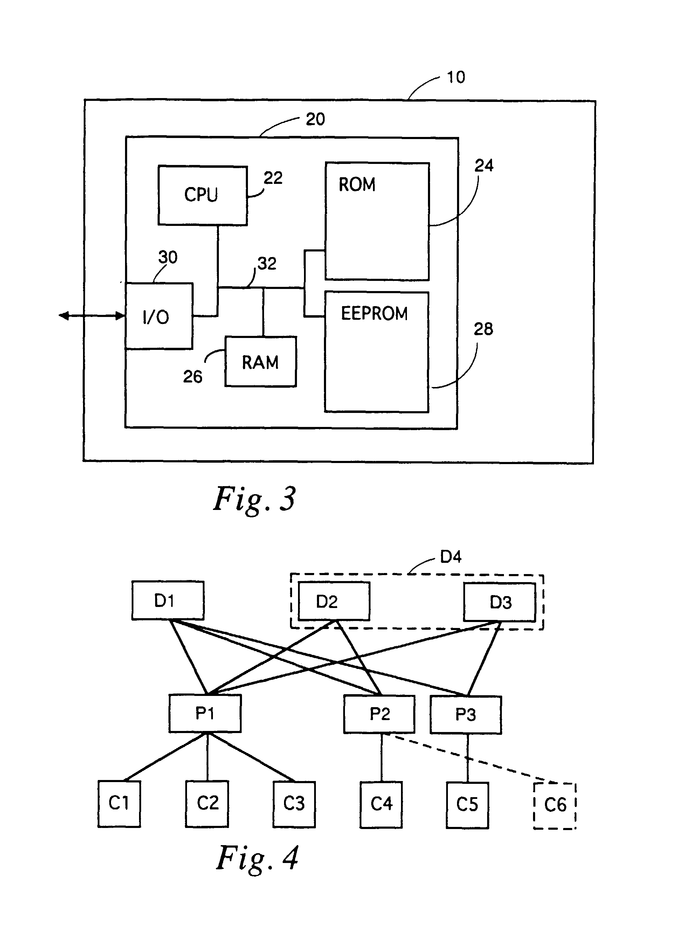

Ces limitations énoncées ci-dessus en A, B, C et D seront mieux comprises lors de la description qui sera faite par la suite en relation avec les figures 4 à 7.

Les bases de données relationnelles sont connues par exemple du document WO-A-91/08541 qui décrit un dispositif de mémorisation stockant une base de données relationnelles, ainsi qu'un ordinateur avec des moyens de lecture dudit dispositif de mémorisation. Le logiciel de génération et/ou de gestion de cette base de données crée un fichier contenant d'une part des enregistrements de données, et d'autre part des enregistrements décrivant les données stockées et/ou des enregistrements décrivant des relations entre des données stockées. Cette base de données comprend des relations internes entre les données. Elle comporte des enregistrements contenant les informations sur les droits d'accès des divers utilisateurs à diverses parties, enregistrements ou champs de la base de données. Les liens internes à la base de données stockés sous forme d'enregistrements décrivent divers types d'informations stockées dans la base ainsi que leurs adresses.

D'autre part, le document WO-A-92/13322 décrit un procédé sécurisé de chargement de plusieurs applications dans une carte à mémoire. Ce document mentionne une structure et une organisation des données d'applications dans une carte ne nécessitant pas d'imposer aux données des places particulières en mémoire. Cette carte possède une mémoire qui comporte en plus d'une mémoire de données, une table des applications, une table des tableaux de données, une table des droits et une table des clefs de chiffrement. Une relation entre les applications, les identifiants et de préférence des codes secrets est mémorisée dans la table des applications. Les relations qui peuvent exister entre une application donnée et un tableau de données avec lequel cette application travaille est enregistrée dans la table des tableaux de données. Les possibilités d'interaction des différentes applications sont définies dans la table des droits. Les applications et les clefs de chiffrement sont associées une à une dans la table des clefs de chiffrement. Tout propriétaire du tableau de données associé, peut entrer à tout moment des nouveaux droits sur les tableaux dans la table des droits ou en enlever.

<u>EXPOSE DE L'INVENTION</u>

Un objet de l'invention consiste à proposer un nouveau système de traitement d'informations, ce système comprenant un ensemble de cartes à mémoire et au moins une unité de gestion, dans lequel la gestion des informations contenues dans les cartes à mémoire est facilitée.

Un autre objet de l'invention consiste à proposer un tel système dans lequel une modification du nombre des unités de gestion peut être traitée plus facilement.

Un autre objet de l'invention consiste à proposer un tel système dans lequel une modification du type de l'unité de gestion peut être traitée plus facilement.

Un autre objet de l'invention consiste à proposer un tel système dans lequel une modification de la hiérarchie de certains droits ou de certaines obligations liées à plusieurs stations centrales peut être traitée plus facilement.

Selon encore un autre objet de l'invention, les cartes à mémoire et l'unité centrale de gestion constituent ensemble une base de données relationnelles.

Selon l'un de ses aspects, l'invention concerne un système destiné à gérer le stockage d'informations et l'exécution de programmes spécifiques, le système comprenant : au moins une unité de gestion, plusieurs cartes à mémoire, chacune comprenant une mémoire inscriptible destinée à stocker au moins certaines informations sous forme d'instructions et une mémoire destinée à stocker au moins un dit programme spécifique.

D'autre part, le système comprend au moins un moyen de communication de données pouvant établir une communication de données entre au moins une unité de gestion et chaque carte à mémoire, afin de transmettre un certain nombre d'instructions qui sont destinées à être stockées ou à être utilisées dans une carte à mémoire lorsque cette carte est connectée à une unité de gestion.

Selon l'invention, chaque carte à mémoire connectée à un instant quelconque à au moins une unité de gestion via un moyen de communication comporte dans ladite mémoire inscriptible un ensemble des informations constitué par le stockage aux emplacements quelconques des informations successives reçues de l'unité de gestion ou de plusieurs unités de gestion, ceci par connection réelle ou virtuelle de la carte. L'ensemble des informations comprenant des liens logiques reliant ou permettant une liaison entre des informations stockées, quel que soit leur emplacement ou leur ordre d'arrivée, et éventuellement aussi une liaison avec d'autres informations, constituent ainsi au sein de la carte une base de données relationnelles, l'ensemble de cartes connectées simultanément formant aussi une base de données relationnelles. Enfin, ledit programme est agencé à passer en revue l'ensemble des informations de la base de données relationnelles constituée au sein de la carte (10) de manière à effectuer au moins une opération spécifique avec des informations reliées entre elles par au moins un lien logique.

Donc, dans cette carte, ia base de données relationnelles est formée, d'une part, par des informations pré-stockées dans la mémoire, et, d'autre part, par des informations reçues d'une ou plusieurs unités de gestion d'informations, les liens logiques de la base de données relationnelles étant contenus, soit dans les informations pré-stockées, soit dans les informations reçues, soit dans les deux, de manière à ce que le ou chaque programme ne puisse effectuer une opération spécifique que lorsque la base de données relationnelles a été constituée au sein de la carte par ladite connection.

Ainsi, et contrairement aux cartes connues, la carte à mémoire selon l'invention devient l'élément central du système, car c'est au sein de la carte même que la base de données relationnelles est constituée, permettant une meilleure gestion des informations et offrant de nombreux avantages qui seront énumérés par la suite.

Afin de constituer de cette manière une base de données relationnelles, chaque instruction est constituée par soit au moins une donnée numérique, soit une donnée de lien logique qui permet d'établir un lien logique entre au moins deux autres instructions ou au moins la présente instruction et au moins une autre instruction, soit une donnée de lien logique associée à au moins une donnée numérique.

Chaque instruction ou partie d'instruction qui est concernée par un lien logique peut être une instruction ou partie d'instruction qui, soit est stockée présentement dans la carte à mémoire, soit est destinée à être stockée ultérieurement dans la carte à mémoire.

Chaque instruction peut être stockée dans la mémoire inscriptible de la carte à mémoire en associant à cette instruction un ou plusieurs codes d'indicateur permettant d'identifier par la suite ledit ou lesdits différents ensembles logiques ainsi constitués.

Dans une forme d'exécution du système, le moyen de communication de données permet de transférer des données uniquement dans le sens allant d'une unité de gestion jusqu'à une carte à mémoire quelconque lorsqu'elle est connectée à cette unité. Par exemple, ce système constitue un système d'accès contrôlé tel qu'un système de télévision à péage dans lequel chaque carte à mémoire est une carte possédée par un abonné au système, connectable à un décodeur du système pour permettre d'exécuter une fonction d'accès contrôlé. Cette unité de gestion constitue, soit un service de gestion des cartes à mémoire, soit une station de diffusion de signal vidéo brouillé, et le moyen de communication de données est constitué par une diffusion de données par voie hertzienne, par satellite ou par câble. Cette communication peut être une communication réelle ou virtuelle.

Avantageusement, l'unité de gestion comprend un moyen de cadencement qui envoie un groupe d'instructions, de façon répétée, selon une période de répétition déterminée, via le moyen de communication de données, de telle sorte que toutes les cartes à mémoire qui sont simultanément connectées à au moins une unité de gestion, à un instant donné quelconque, aient reçu, dans le laps de temps de la période de répétition, le groupe d'instructions. Toutes les cartes à mémoire qui sont ainsi simultanément connectées à cet instant constituent alors de façon opérationnelle une base de données relationnelles.

L'invention concerne aussi la carte à mémoire elle-même, du type carte télévision à péage, carte bancaire ou autre carte pour un système d'accès contrôlé ou semblable, comportant une mémoire inscriptible stockant un ensemble d'informations, et au moins un programme destiné à effectuer des opérations spécifiques sur les informations stockées.

L'invention concerne également un groupe de cartes à mémoire où chaque carte du groupe comprend une mémoire inscriptible destinée à stocker des informations et une mémoire destinée à stocker au moins un programme spécifique, et l'ensemble constitué par les cartes à mémoire du groupe qui sont à un instant quelconque connectées simultanément à une unité de gestion via un moyen de communication de données constitue à cet instant une base de données relationnelles.

L'invention concerne également un procédé de gestion et d'exécution de programmes spécifiques dans un système tel qu'énoncé.

Dans une application, par exemple pour la télévision à péage, les informations sont transmises entre au moins une unité de gestion et les cartes à mémoire selon un flux unidirectionnel allant depuis au moins une unité de gestion jusqu'aux cartes à mémoire.

Pour d'autres applications, notamment dans le domaine bancaire, il est prévu au moins deux unités de gestion différentes, et les informations sont transmises entre les unités de gestion et les cartes à mémoire selon un flux bidirectionnel, et certaines informations sont, lors d'une première connexion d'une carte à mémoire avec une première unité de gestion, transmises depuis celle-ci jusque dans cette carte à mémoire, puis sont, lors d'une autre connexion simultanée ou ultérieure d'une carte à mémoire avec une autre unité de gestion, transmises depuis cette carte à mémoire jusque dans cette autre unité de gestion.

Il en résulte que certaines informations spécifiques sont alors transmises depuis la première station centrale jusque dans l'autre station centrale, même dans des situations où les unités de gestion ne peuvent pas échanger entre elles certaines informations spécifiques, par exemple pour des raisons de sécurité. Une application particulière dans le domaine bancaire consiste en la possibilité pour l'utilisateur de la carte d'effectuer, au sein de la carte, des opérations sur des comptes différents, gérés par des unités de gestion différentes.

Les systèmes classiques permettent à un opérateur l'utilisation totale, partielle ou partagée de zones mémoires privées selon des paramètres définis, en lui autorisant d'effectuer des opérations de lecture, écriture, de modification et/ou de calcul en fonction d'ordres donnés concernant certaines informations se trouvant dans une zone déterminée.

Le système selon l'invention prévoit de réaliser les opérations de lecture, d'écriture, de modification et/ou de calcul en fonction des liens trouvés, ce qui signifie que l'opérateur n'a pas accès à une zone définie mais à une information satisfaisant au lien demandé par l'opérateur.

Les conditions d'accès sont accordées en fonction de données liées, par définition, aux droits d'accès, qui peuvent être constitués par exemple par un mot de passe ou un algorithme de chiffrement.

Parallèlement à la faculté de moduler les droits d'accès ou d'utilisation de l'information, ce nouveau système permet d'optimiser l'utilisation de la ressource mémoire et de pouvoir s'accommoder d'emplacements de mémoire devenues inutilisables.

L'accès à l'information est régi par des programmes spécifiques écrits dans un langage de type "langage de base de données relationnelles". Ces programmes peuvent être pré-définis dans la carte à mémoire sous forme compilée, peuvent être téléchargés sous forme compilée ou peuvent être téléchargés avec des macro-instructions à interpréter. Le concept de programme interprété permet de limiter les droits d'un opérateur.

Les applications bancaires prévoyant plusieurs prestataires pourront utiliser un concept de lien interopérateurs établi par échange de cryptogrammes. Dans ce cas, le demandeur du lien enverra un cryptogramme d'identification muni d'un jeton (identification de transaction). Le récepteur vérifiera la validité du message et, en cas de succès, mémorisera le jeton. Ce concept permet de définir précisément les relations inter-zones dans une carte à mémoire.

Le nouveau concept pourra être utilisé comme suit :

A. On considère que le système de gestion de l'opérateur et l'ensemble de toutes les cartes à mémoire forment une base de données relationnelles. Chaque opération effectuée entre le système de gestion de l'opérateur et une partition des cartes à mémoire peut être modélisée comme une commande de type "langage de gestion de base de données relationnelles".

B. Une même carte à mémoire peut faire partie de plusieurs bases de données relationnelles intégrant un système de gestion de l'opérateur et des cartes à mémoire, à savoir qu'elle peut faire partie de plusieurs entités.

C. Les commandes et demandes d'information provenant de l'extérieur déclenchent l'exécution d'un programme écrit dans un langage de type "langage de gestion de base de données relationnelles" permettant de définir de façon précise les droits d'accès à l'information et les traitements. Les programmes peuvent mémoriser sous forme compilée ou à interpréter.

D. Par cette structure, il est possible de réaliser un système où aucun élément du système ne contient toutes les informations. Pour que le système puisse fonctionner dans son ensemble, il est nécessaire de disposer des systèmes de gestion et des cartes à mémoire associées, ces dernières jouant le rôle d'interface entre les différentes composantes du système.

E. La structure interne de la carte à mémoire est organisée en tant que base de données relationnelles. Elle permet de gérer de façon "dynamique" les droits ou autres informations mémorisées.

F. La structure de la base de données de chaque carte à mémoire associe des informations entre elles, ainsi qu'avec des programmes et des clés de chiffrement (sécurité de transmission) . La notion de clé de chiffrement est en fin de compte considérée comme un lien entre une information, la méthode de chiffrement et la clé de chiffrement.

G. La structure de la base de données permet de transmettre des informations entre l'unité de gestion et la carte à mémoire de façon compacte en envoyant des informations de modification de la base de données, plutôt que d'envoyer directement celle-ci pour créer une copie. La structure de lien permet de vérifier que toutes les informations ont été reçues avant de les rendre utilisables.

H. La mise en place de ce nouveau système exploite la technologie actuelle des cartes à mémoire, à savoir que la taille mémoire "inscriptible" est relativement faible. L'établissement des liens ou leur vérification se fait par un examen complet de la mémoire. La mémoire stocke simplement toutes les informations les unes à la suite des autres, avec les informations de lien intégrées. Par contre, ce système n'autorise jamais une lecture "directe" d'une zone mémoire, seule la lecture par lien interposé est possible, pour autant que l'accès soit autorisé.

I. La distinction entre les informations sujettes à autorisations différentes se fait par un lien avec un algorithme de chiffrement et une clé de chiffrement ou un mot de passe et non par un contrôle d'accès déterminé par une procédure d'authentification permettant l'accès à l'information dans une zone sélectionnée.

J. La structure de la mémoire ne prévoit pas de lieu de stockage prédéfini pour chaque fonction, à savoir l'information, les programmes, les clés de chiffrement et les dates de validité. Par contre, elle dispose d'un espace continu où les informations sont stockées et où leur utilisation est régie par des liens entre elles (conditions) . On peut modéliser -cette structure en considérant que la mémoire est remplie de données pouvant être une date, une clé, un crédit, un logiciel et/ou des données générales et un lien définissant les conditions d'utilisation.

K. Le système présenté dispose d'un système de "nettoyage" des zones non-utilisées. Le nettoyage est rendu possible par un lien "date limite de validité" qui permet d'éliminer automatiquement les données ou liens caducs. Il est naturellement également possible de libérer explicitement par ordre des zones déterminées.

L. La notion de porte-monnaie est définie comme un système où l'établissement d'un lien est "payant". Cependant, seuls les établissements de liens "autorisés" peuvent avoir lieu et débitent le crédit.

M. De nouvelles fonctionnalités peuvent être téléchargées sous la forme de processus pouvant être appliqués à des données liées. Par cette méthode, il sera possible de limiter l'utilisation de ces nouvelles fonctionnalités à des opérations sélectionnées.

N. Les commandes d'établissement de lien peuvent être réalisées, soit en adressant directement une carte à mémoire, soit en considérant que celle-ci appartient à un groupe où chaque carte est adressée par un code hiérarchisé (appelé bit map). La notion d'adresse peut également être considérée comme un lien.

O. Les cartes à mémoire peuvent également recevoir des commandes demandant une fonction spécifique (de cryptage par exemple). Dans un tel cas, la fonction à appliquer peut être définie par un lien vers une telle fonction.

P. L'ensemble des commandes que peut exécuter une carte à mémoire peut être crypté.

Q. Les échanges d'information inter-zones peuvent se faire de façon cryptée et avec jetons, pour permettre une sécurité inter-zones, principalement destinée aux applications bancaires.

L'intérêt du nouveau concept selon l'invention est le suivant.

Par opposition au système de carte à mémoire de deuxième génération, le système décrit ici permet de moduler les droits d'accès à l'information de façon plus fine que celle qui consiste à définir à chaque "opérateur" un droit d'accès. Le système proposé permet de définir des droits d'accès pour chaque information définie.

Ce système permet de faire jouer à une carte à mémoire un rôle central dans la gestion de l'information, en se trouvant au coeur d'un système, plutôt que de la considérer comme étant une juxtaposition de copies de données existantes dans un système de gestion.

Les systèmes classiques prévoient que l'information soit établie par un opérateur de façon complète avant d'être transférée à la carte à mémoire. Cela signifie qu'il est nécessaire de concentrer l'ensemble des informations propres à un opérateur avant de les transférer à la carte à mémoire (même s'il n'est pas nécessaire d'effectuer cette opération au même endroit pour tous les opérateurs d'une même carte).

Le système proposé permet d'établir l'information à l'intérieur de chaque carte à mémoire. Cet établissement "à l'intérieur" permet d'exploiter de façon optimale la notion de "secret partagé", ne nécessitant pas de construire une image du contenu de la carte à mémoire avant de le transférer.

Ce concept signifie que, pour un opérateur donné, l'information est distribuée entre son système de gestion et l'ensemble des cartes, car il n'a pas d'accès autre par les cartes à mémoire à certains liens.

En pratique, la structure d'information définie permet de composer l'information à l'intérieur de la carte plutôt que de transmettre à la carte à mémoire des informations toutes prêtes.

Autrement dit, un nouveau système est proposé, ce système comportant des cartes à mémoire où les informations ne sont pas stockées dans des cases prédéfinies, en vue de leur utilisation, mais où les informations sont mémorisées en fonction de la place disponible ou rendue disponible dans la mémoire et voient leur rôle déterminé par les conditions d'utilisation associées.

BREVE DESCRIPTION DES DESSINS

Ces objets, caractéristiques et avantages, ainsi que d'autres, seront mieux compris lors de la description détaillée qui va suivre d'un mode de réalisation donné seulement à titre d'exemple non limitatif, illustré par les figures annexées parmi lesquelles :

la figure 1 illustre un système selon la présente invention ;
la figure 2 est un diagramme montrant le mode de stockage d'informations dans une carte à mémoire du système selon l'invention ;
la figure 3 représente de façon simplifiée la structure d'une carte à mémoire d'un système selon la présente invention ;
la figure 4 représente un exemple d'une configuration générale de diffusion de plusieurs chaînes de télévision ;
la figure 5 représente un autre exemple d'une configuration générale de diffusion de plusieurs programmes de télévision ;

la figure 6 représente un exemple de stockage et d'utilisation des données correspondant à l'exemple de configuration de la figure 5 dans un système classique ; et

la figure 7 représente un exemple de stockage et d'utilisation des données correspondant au même exemple de configuration de la figure 5 mais dans un système selon la présente invention.

MODES DE REALISATION PREFERES

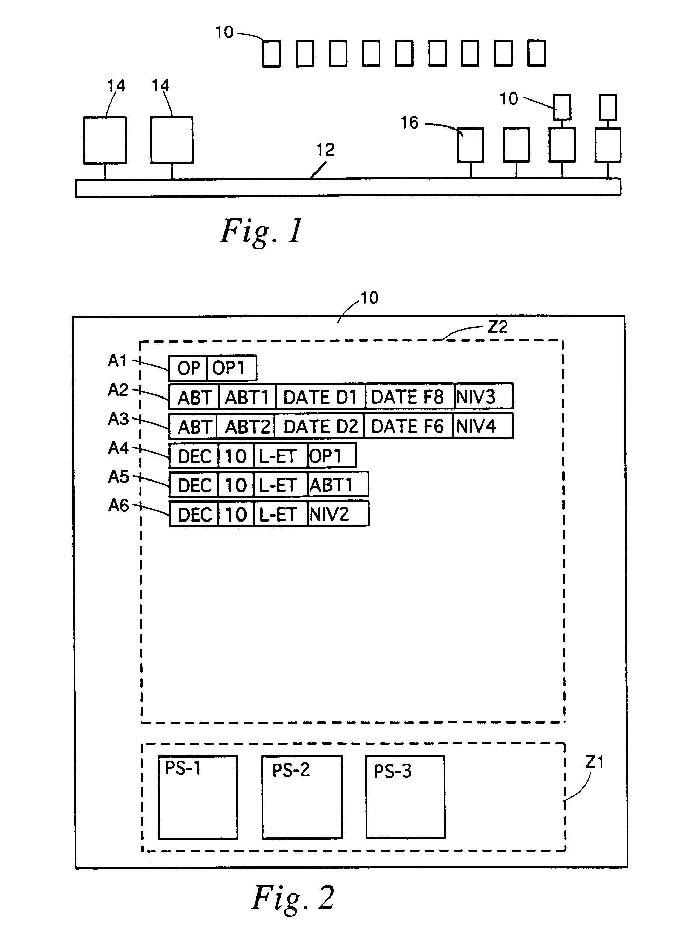

Sur la figure 1, on voit de façon schématique un exemple d'un système selon l'invention. Ce système est constitué par un certain nombre de cartes à mémoire 10, un réseau de communication de données 12, au moins une unité de gestion 14 (ici deux unités sont représentées), connectées au réseau 12, et au moins une station terminale 16 (ici quatre sont représentées) connectées au réseau 12. A tout moment, une carte peut être reliée aux unités 14 en étant connectée à une station terminale 16 appelée également dispositif de connection. Cette connection peut être réelle ou virtuelle.

Cette configuration peut correspondre par exemple à un système de cartes bancaires. Cependant, dans le cas de la télévision à péage, les unités 14 sont des émetteurs de télévision ou des agences offrant certains services commerciaux liés à la télévision à péage (gestion des abonnements, etc ...), le réseau 12 n'est pas une ligne physique mais est constitué par la propagation hertzienne, par satellite ou par câble du signal vidéo, les dispositifs de connexion 16 sont des décodeurs d'abonnés, un abonné possédant un décodeur 16 et une carte 10 connectable au décodeur afin de pouvoir recevoir une émission décodée ou débrouillée.

Le système selon l'invention peut donc s'appliquer à deux grandes familles, une famille du type réseau bancaire et une famille du type télévision à péage. La différence entre ces deux familles réside principalement dans le fait que dans un réseau bancaire, des informations peuvent passer dans les deux sens entre l'opérateur et la carte, alors que dans une télévision à péage, l'information passe essentiellement dans le sens opérateur (émission) vers carte (réception).

Sur la figure 2, on voit un certain nombre de cases qui représentent schématiquement des informations qui sont stockées dans une "mémoire inscriptible", par exemple une EEPROM, d'une carte à mémoire 10 d'un système selon l'invention qui est appliqué par exemple à la télévision à péage. Dans la suite du texte on appellera "mémoire inscriptible" toute mémoire qui offre la possibilité de stocker de nouvelles données, avec ou sans la possibilité d'effacer sélectivement certaines données stockées antérieurement. On voit qu'une EEPROM répond ainsi à cette définition particulière de "mémoire inscriptible" mais qu'une mémoire vive, par exemple alimentée avec une pile de secours, répond aussi à cette définition.

Quand une carte 10 est connectée à l'unité de gestion 14 d'un opérateur, la carte reçoit un certain nombre d'informations en provenance de l'opérateur.

La carte 10 contient une zone mémoire Z1 qui contient un certain nombre de programmes spécifiques PS-1, PS-2, PS-3 dont chacun correspond à un mode d'utilisation de la carte. Par exemple, en télévision à péage, la carte peut servir :

- à décoder une émission reçue (programme PS-1),
- à acheter des droits d'accès à des émissions à venir (programme PS-2),
- à subir une modification du crédit d'émission (programme PS-3),
- à enregistrer des modifications dans les droits d'accès aux émissions à venir, en fonction de modifications apparaissant par exemple dans l'organisation de l'émission ou la distribution de programmes de télévision (par exemple des fusions ou des scissions entre des chaînes de télévision), etc.

La carte contient aussi une zone mémoire Z2 dont la fonction sera précisée par la suite.

Prenons l'exemple de l'utilisation de la carte 10 pour décoder une émission reçue. L'opérateur envoie une instruction spécifique DEC qui est reçue par la carte qui active alors le programme PS-1 qui correspond à cette fonction de décodage d'émission reçue DEC. L'opérateur envoie alors un certain nombre d'instructions A1, A2, A3, ... An qui seront stockées dans la zone Z2 de la carte, à la suite les unes des autres, dans l'ordre où elles arrivent. L'ordre de stockage ou l'emplacement du stockage dans la zone Z2 n'a pas d'importance. L'une des originalités du système selon l'invention réside dans le fait que ces instructions A1, A2, A3, ... An incluent des "liens logiques entre des données" (que l'on appellera par la suite simplement des "liens").

Par exemple, comme cela est représenté sur la figure 2, on peut trouver les instructions suivantes, avec leur signification :

| Instruction A1 | |
|---|---|
| OP | Cette instruction concerne une désignation d'opérateur autorisé |

(suite)

| Instruction A1 | |
|---|---|
| OP1 | Cet opérateur autorisé est l'opérateur N°1 |

| Instruction A2 | |
|---|---|
| ABT | Cette instruction concerne un droit d'abonnement acquis |
| ABT1 | Concerne l'abonnement N° 1 |
| DATE D1 | Date de début D1 de cet abonnement |
| DATE F8 | Date de fin F8 de cet abonnement |
| NIV 3 | Niveau du droit de réception 3 (par exemple, un niveau 1 peut correspondre aux sports, un niveau 2 aux sports + films, un niveau 3 aux sports + films + variétés, un niveau 4 à toutes émissions, etc...) |

| Instruction A3 | |
|---|---|
| ABT | Cette instruction concerne un droit d'abonnement acquis |
| ABT2 | Concerne un autre abonnement N° 2 |
| DATE D2 | Date de début D2 de cet abonnement |
| DATE F6 | date de fin F6 de cet abonnement |
| NIV 4 | Niveau du droit de réception 4 |

On peut trouver ensuite d'autre types d'instructions qui sont les suivantes, avec leur signification :

| Instruction A4 | |
|---|---|
| DEC | Cette instruction concerne un décodage |
| 10 | Lien 10 (c'est-à-dire que toutes les instructions qui ont le même N° de lien sont liées logiquement entre elles) |
| L-ET | Lien logique ET (habituellement on trouve des liens logiques classiques ET, OU, NI, etc.) |
| OP1 | L'opérateur qui envoie cette instruction est l'opérateur N°1 |

| Instruction A5 | |
|---|---|
| DEC | Cette instruction concerne un décodage |
| 10 | Lien 10 |
| L-ET | Lien logique ET |
| ABT1 | L'opérateur qui envoie cette instruction diffuse un abonnement N°1 |

| Instruction A6 | |
|---|---|
| DEC | Cette instruction concerne un décodage |
| 10 | Lien 10 |
| L-ET | Lien logique ET |
| NIV 2 | L'opérateur qui envoie cette instruction diffuse une émission de niveau 2 |

Les instructions A1 à A3 sont des droits qui ont été donnés à la carte 10 antérieurement. Autrement dit, à un certain moment, un opérateur autorisé est désigné par opérateur N°1 (instruction A1), puis un opérateur autorisé a inscrit dans la carte les droits pour l'abonnement N°1 (instruction A2) et à un autre moment, le même opérateur ou un autre opérateur autorisé a inscrit dans la carte les droits pour l'abonnement N°2 (instruction A3).

Les instructions A4 à A6 sont des instructions envoyées par un opérateur à la carte en même temps que l'opérateur diffuse une émission brouillée, ces instructions permettant de n'autoriser le débrouillage (ou décodage) par le décodeur auquel est connectée cette carte que si les conditions de droits acquis par la carte sont satisfaites.

Lors de la réception des instructions A4 à A6, la carte 10 reconnait que ces instructions concernent une fonction de décodage (code DEC) et par conséquent la carte active son programme spécifique PS-1 qui sert à n'autoriser le décodage que si les droits sont acquis. Ce programme spécifique PS-1 fonctionne en conséquence de la manière suivante :

(1) considérer toutes les instructions qui ont un "lien" entre elles, c'est-à-dire toutes les instructions qui ont le même N° de lien (dans cet exemple, considérer les trois instructions A4, A5 et A6 comme étant liées),

(2) considérer les types logiques de liens (dans cet exemple, les trois instructions A4, A5 et A6 sont liées par des ET logiques),

(3) vérifier si A4 est vérifiée (dans cet exemple, vérifier si l'opérateur qui envoie l'instruction A4 est autorisé - la réponse est OUI du fait que l'instruction A1 est vérifiée),

(4) si OUI, vérifier si A5 est vérifiée (dans cet exemple vérifier si la carte a les droits pour l'abonnement diffusé - la réponse est OUI du fait que l'instruction A2 est vérifiée, c'est-à-dire que l'abonnement diffusé ABT1 est égal à l'abonnement acquis ABT1),

(5) si OUI, vérifier si A6 est vérifiée (dans cet exemple vérifier si la carte a les droits pour le niveau diffusé - la réponse et OUI du fait que l'instruction A2 est vérifiée, c'est-à-dire que le niveau de l'émission diffusée (niveau 2) pour l'abonnement ABT1 est inférieur ou égal au niveau acquis dans la carte (niveau 3) pour ce même abonnement ABT1),

(6) si OUI, vérifier si la date courante est comprise entre les dates de début et de fin pour l'abonnement diffusé (dans cet exemple la réponse est OUI si la date courante est comprise entre D1 et F8 qui sont les dates de début et de fin pour ce même abonnement ABT1),

(7) le programme spécifique PS-1 autorise alors le décodage par le décodeur 16 si il a obtenu :

une réponse OUI pour l'instruction A4
ET une réponse OUI pour l'instruction A5
ET une réponse OUI pour l'instruction A6
ET une réponse OUI pour l'étape (7) qui est une étape spécifique du programme PS-1 (c'est-à-dire un contrôle qui concerne spécifiquement le programme PS-1 qui sert à vérifier les conditions obligatoires pour autoriser le décodage).

Autrement dit, le programme spécifique vérifie l'existence des liens logiques entre les instructions qui arrivent (dans cet exemple le programme spécifique PS-1 vérifie les instructions de proposition de décodage, c'est-à-dire les instructions A4, A5 et A6, à partir des droits qui sont acquis dans la carte, c'est-à-dire des droits définis par les instructions antérieurement stockées A1, A2 et A3). Le programme peut aussi effectuer des vérifications complémentaires qui sont spécifiques à la fonction que le programme implémente : dans cet exemple, le programme PS-1 effectue la vérification spécifique de l'étape (7).

On voit que dans la zone mémoire Z2 de la carte à mémoire 10, on peut stocker à la suite les différentes instructions qui arrivent A1, A2, etc., sans que l'ordre de stockage n'ait d'importance. Si une instruction est supprimée, les instructions qui suivent peuvent être décalées pour supprimer l'espace mémoire libéré, ceci dans le cas où toutes les instructions n'ont pas la même longueur. Si le formatage des instructions est tel que les instructions ont toutes la même longueur, on ne décale pas les instructions qui suivent une instruction supprimée parce que l'on peut stocker une nouvelle instruction dans l'espace mémoire libéré.

En fait, quand un programme spécifique est exécuté, l'opération qui consiste à vérifier tous les liens entre les différentes instructions stockées est une opération qui est effectuée en passant en revue successivement toutes les instructions stockées. C'est pour cette raison que l'ordre de stockage des différentes instructions n'a pas d'importance.

La figure 3 représente la structure d'une carte à mémoire d'un système selon la présente invention. Cette carte à mémoire 10 peut comporter un unique circuit intégré 20 comprenant principalement une unité centrale de traitement (CPU) 22, une mémoire morte ROM 24, une mémoire vive RAM 26 et une mémoire morte programmable électriquement effaçable EEPROM 28, un circuit d'entrée/sortie (I/O) 30 et un dispositif de communication de données 32 reliant ces différents éléments.

La mémoire ROM 24 contient des informations permanentes permettant de gérer les entrées/sorties, un programme de base du fonctionnement initial de la carte 10 et un ou plusieurs programmes définissant les commandes et les instructions générales de la base de données. Notamment, la ROM 24 contient un moyen de pilotage de l'EEPROM 28 qui effectue, à l'instant où la carte 10 est connectée à une unité de gestion 22 les opérations suivantes :

- commande de la mémoire EEPROM 28 pour qu'elle stocke chaque instruction arrivante, en provenance de l'unité de gestion 22, dans des emplacements mémoire quelconques, sélectionnés par la mémoire EPPROM 28; et
- recherche préalable lors de l' arrivée d'une instruction, pour déterminer si oui ou non cette instruction est déjà stockée dans la mémoire EEPROM 28, et stockage de cette instruction en un emplacement quelconque de la mémoire EEPROM 28 uniquement si cette instruction n'est pas déjà stockée.

La mémoire EEPROM 28 peut mémoriser l'ensemble des instructions de la base de données et éventuellement d'autres commandes de base de données que l'on peut vouloir effacer ainsi que les programmes spécifiques PS-1, PS-2, PS-3, etc. dont il a été fait état précédemment.

La figure 4 illustre une configuration générale d'une organisation de production et de diffusion de plusieurs chaînes de télévision à péage. Cette configuration est donnée à titre d'exemple dans le seul but de montrer les possibilités d'adaptation et d'évolution du système selon la présente invention. Comme cela est représenté sur cette figure, on suppose que, dans une région donnée, il existe plusieurs producteurs de télévision P1, P2, P3. Le producteur P1 produit les chaînes C1, C2 et C3. Le producteur P2 produit la chaîne C4, le producteur P3 produit la chaîne C5. Il existe aussi plusieurs diffuseurs (par exemple un diffuseur assurant la diffusion à l'aide d'un réseau hertzien, un autre diffuseur assurant une diffusion par câble, etc...). On trouve dans cet exemple trois diffuseurs différents, D1, D2, D3.

Cette configuration générale doit être communiquée à l'ensemble des cartes à mémoire du système selon l'invention. Cette communication peut être effectuée par exemple en introduisant dans le signal vidéo (par exemple lors du retour vertical) de toutes les chaînes émises les instructions qui décrivent cette configuration. Cette émission des instructions simultanément sur toutes les chaînes émises peut être répétée périodiquement, par exemple lors de chaque retour vertical du signal vidéo ou chaque seconde. Par conséquent, à tout moment, lorsqu'une carte à mémoire est connectée à un décodeur d'abonné qui est en fonctionnement de façon à recevoir l'une des chaînes émises, ces instructions de description de la configuration générale sont automatiquement stockées dans la carte à mémoire. Ces instructions de description de configuration sont les suivantes :

$$P1 = C1 + C2 + C3$$

$$P2 = C4$$

$$P3 = C5$$

$$D1 = P1 + P2 + P3$$

$$D2 = P1 + P2$$

$$D3 = P1 + P3$$

La signification de ces instructions écrites ici de façon symbolique est la suivante : le producteur P1 peut produire les chaînes C1, C2 et C3, le producteur P2 peut produire la chaîne C4, le producteur P3 peut produire la chaîne C5, le diffuseur D1 diffuse les émissions des producteurs P1, P2 et P3, le diffuseur D2 diffuse les émissions des producteurs P1 et P2, le diffuseur D3 diffuse les émissions des producteurs P1 et P3.

Si des modifications sont apportées à cette configuration générale, comme cela est vraisemblablement le cas au cours du temps, toutes les instructions contenues dans toutes les cartes à mémoire deviennent fausses. Cependant, comme on va le voir par la suite, la réactualisation, c'est-à-dire la mise à jour, des instructions de configuration contenues dans toutes les cartes à mémoire est relativement facile à effectuer si on utilise un système selon la présente invention.

Par exemple, si la configuration générale est modifiée de telle sorte (comme cela est dessiné sur la figure 3 en pointillés) que le producteur P2 produise en plus une chaîne C6 et que les diffuseurs D2 et D3 fusionnent pour ne former qu'un seul nouveau diffuseur D4 qui conserve physiquement l'ensemble des réseaux appartenant précédemment aux deux diffuseurs D2 et D3. On voit que cette modification de la configuration générale peut être aisément prise en compte au niveau des cartes à mémoire. Pour cela, il suffit de rajouter deux nouvelles instructions :

$$P2 = C6$$

$$D4 = D2 + D3$$

Toutes les anciennes instructions restent valables. Les nouvelles instructions rajoutent les liens logiques qui se présentent les modifications de la configuration.

En fait, cette modification de la configuration générale peut s'exprimer d'une façon logique, selon une algèbre booléenne, et cette description logique ou booléenne correspond à de nouveaux liens qui viennent s'ajouter aux liens qui existaient déjà. On comprend que ce nouveau concept permette une très grande facilité de la gestion et de la communication des informations qui doivent être communiquées aux cartes à mémoire du système.

Si, après avoir mis à la disposition du public un premier lot de cartes à mémoire qui peut fonctionner avec la configuration générale qui vient d'être décrite, on veut diffuser un autre lot de cartes à mémoire qui présentent toutes une extension particulière par rapport aux possibilités de réception de chacune offertes par cette configuration générale, par exemple si ce nouveau lot de cartes à mémoire se caractérise par le fait qu'on veuille que ces cartes puissent débrouiller la chaîne du producteur P3 au travers du diffuseur D2 (ce qui n'est pas permis par le premier lot de cartes), il suffit de stocker initialement dans toutes les cartes du second lot l'instruction suivante :

$$D2 = P3$$

On pourrait trouver ainsi un grand nombre d'autres possibilités pour modifier à l'infini les caractéristiques commerciales du système selon l'invention.

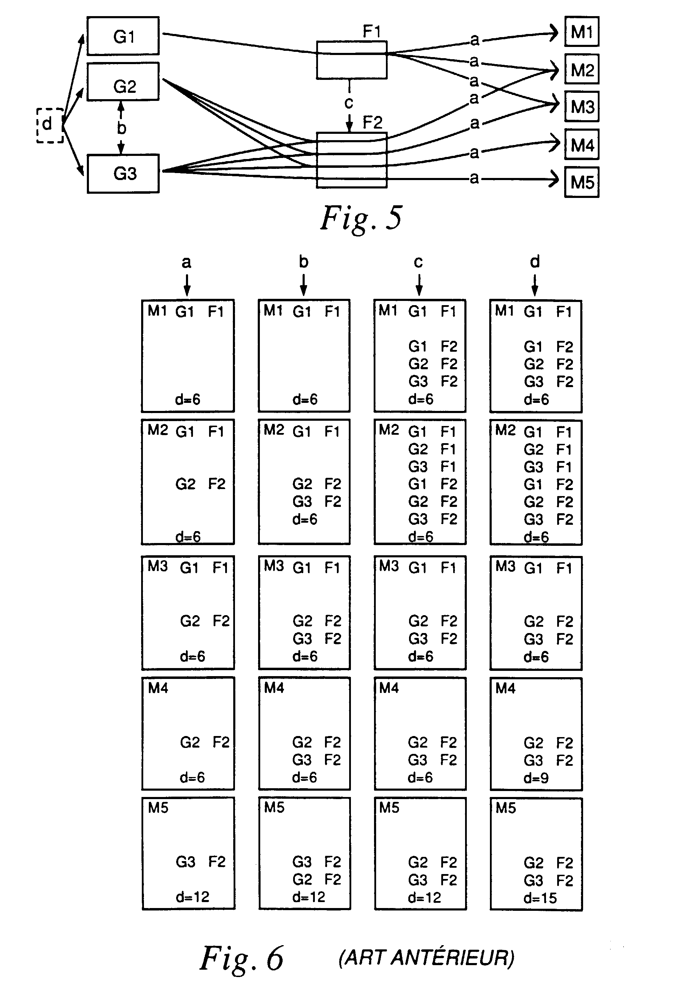

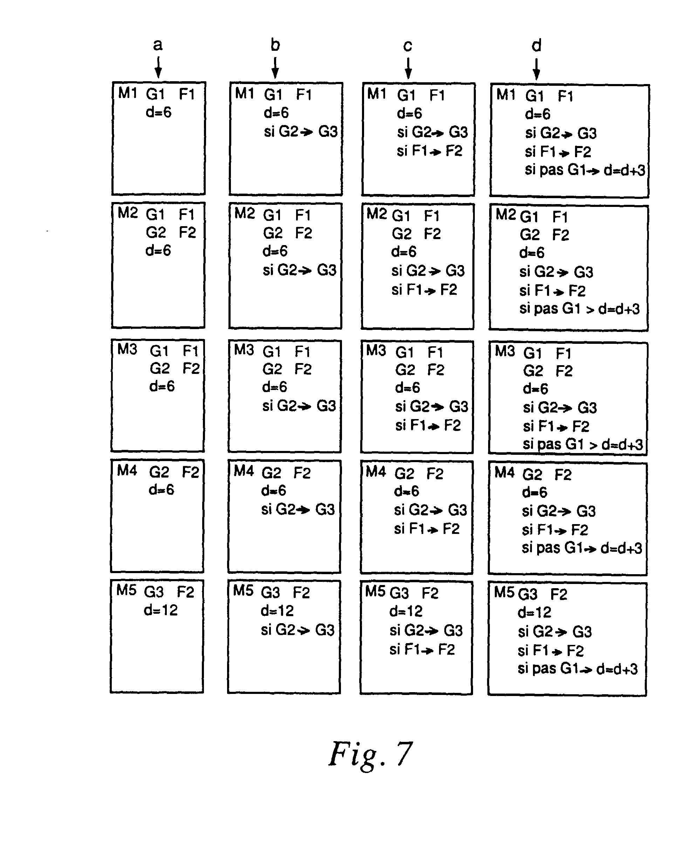

Les figures 5 à 7 illustrent une configuration générale imaginaire d'une autre organisation de diffusion de plusieurs programmes de télévision à péage, donnée uniquement à titre d'illustration, afin de montrer comment le stockage d'informations et l'exécution de programmes spécifiques sont effectués dans les cartes à mémoire lorsque l'on utilise un système de gestion classique (figure 6) et un système de gestion selon l'invention (figure 7). Sur la figure 5, on a représenté symboliquement une évolution dans le temps d'une organisation de diffusion de programmes de télévision à péage. Les flèches "a" représentent l'organisation telle qu'elle existe pendant une période initiale, la double flèche "b" représente l'organisation telle qu'elle existe pendant une période suivante, la flèche "c" représente l'organisation telle qu'elle existe pendant une période encore suivante et le carré "d" représente un ajoût dans l'organisation tel qu'il est établi pendant une période encore suivante.

L'organisation initiale (flèches "a") comprend un premier diffuseur F1 qui diffuse un unique programme de télévision G1. Les trois cartes à mémoire M1, M2, M3 sont abonnées pour 6 mois à ce programme G1 via ce diffuseur F1. L'organisation initiale comprend aussi un autre diffuseur F2 qui diffuse deux autres programmes G2 et G3. Les cartes M2, M3 et M4 (abonnées pour 6 mois) sont abonnées à G2 via F2 et la carte M5 (abonnée pour 12 mois) est abonnée à G3 via F2.

Cette organisation a ensuite évolué (flèches "b") dans le sens où il est convenu que "tout abonné à G2 peut recevoir en outre G3 et vice-versa".

Cette organisation a encore ensuite évolué (flèche "c") dans le sens où il est convenu que "tout abonné de F1 peut en outre recevoir les programmes de F2, mais tout abonné de F2 continue à ne recevoir que les programmes de F2".

Cette organisation a encore ensuite évolué (carré "d") dans le sens où il est convenu que "pour les abonnés qui ne sont pas abonnés à G1, il est offert une prolongation gratuite de 3 mois de leur durée d'abonnement".

Sur la figure 6 (système de l'art antérieur), on a représenté les contenus des cartes M1 à M5 (première colonne de la figure) lors de l'organisation initiale. Dans chaque carte, on inscrit donc le ou les programmes permis, le ou les diffuseurs permis et la durée d de l'abonnement. On a représenté aussi les contenus des cartes M1 à M5 deuxième colonne de la figure) pour tenir compte de l'évolution de l'organisation (flèche "b"), et ainsi de suite. On voit que lors de chaque évolution de l'organisation, il faut traiter individuellement chaque carte en 1°) analysant la carte pour savoir quels droits elle contient déjà et 2°) inscrivant en fonction de ces droits déjà existants d'éventuels nouveaux droits. Dans la pratique, cette opération nécessite de consulter une image pré-enregistrée de chaque carte dans un centre de gestion. S'il y a plusieurs millons de cartes, le travail est immense et ne peut pas être envisagé à tout instant mais seulement très exceptionnellement. Or, il serait fort intéressant commercialement de pouvoir diffuser à tout moment un message publicitaire informant d'un changement immédiat dans l'organisation, tout en effectuant ce changement. Cela n'est pas possible avec les cartes classiques.

Sur la figure 7 (système selon notre invention), on voit que lors de chaque évolution successive de l'organisation, il suffit de rajouter de nouvelles règles logiques (c'est-à-dire rajouter de nouveaux liens logiques), à la suite des anciennes règles. Il n'est donc plus nécessaire de "lire" dans chaque carte les droits déjà inscrits pour décider de quel nouveau droit cette carte peut bénéficier. On envoie simultanément dans toutes les cartes les nouvelles règles (c'est-à-dire les nouveaux liens logiques) et chaque carte détermine ensuite quels sont ses droits spécifiques.

En comparant le système de l'art antérieur (figure 6) et le système de notre invention (figure 7), on peut, par exemple, voir que selon notre invention, les instructions qui résultent des événements b, c et d impliquent des mémorisations d'instructions de liens logiques qui sont toutes identiques pour toutes les cartes pour chaque changement, alors qu'avec le système classique, pour chaque changement, on doit envoyer différentes instructions pour différentes cartes. Il est donc évident que le système selon l'invention simplifie considérablement la gestion des cartes.

La motivation originale de l'invention provient donc des limites des possibilités de la carte à mémoire dans les utilisations en télévision à péage pour lequelles l'introduction de la notion de base de données sur une carte à mémoire a été nécessaire pour les raisons suivantes :

A. Notion de grappe

Statistiquement, l'évolution du contenu des cartes se fait à 95% de façon implicite (reconduction simple des droits de la carte) et à 5% de façon singulière. Selon les systèmes classiques l'ensemble des opérations (reconduction et traitement singuliers) se fait de façon similaire en transmettant le nouveau contenu de la carte à mémoire (ou de la zone concernée). Cette méthode est la seule pratiquement utilisable dans le concept classique ; il est en effet dangereux de donner 100% de droits illimités à des cartes et de détruire les droits concernant 5% des cartes pour y réintroduire les nouveaux droits, car il est impossible de garantir que les informations de destruction soient bien arrivées.

La solution proposée ici permet de lier par exemple l'ensemble des informations à une date de validité qui sera la seule à être reconduite, ceci permet de prolonger la validité des informations en envoyant une seule information plutôt que de traiter ses composantes. Pour les 5% à traiter de façon singulière, il sera nécessaire de reconstruire de nouveaux liens.

B. Autorisations multiples

Selon l'approche classique en télévision à péage, l'opérateur du service gère le parc d'abonnés comme une seule entité homogène. Toute prise d'abonnement ou modification de ce dernier ne pourra se faire que par l'opérateur directement. Selon cette logique il y aura autant de zones opérateur sur la carte que d'opérateurs fournissant un service. Dans cette logique, seul l'opérateur "original" pourra "couper le robinet" à un client ne payant pas. A titre d'exemple, on peut considérer un client X abonné à la chaîne A au travers d'un réseau câblé R ; si le client X ne paie pas au réseau câblé sa redevance "câble", le réseau R devra demander à la chaîne A de suspendre les droits dont il dispose. Cet état de fait alourdit de façon considérable la gestion en augmentant le volume d'informations échangées, notamment entre le réseau R et la chaîne A, ainsi qu'entre la chaîne A et l'abonné X. En outre, cela demande que les périodes de paiement entre la chaîne A et le réseau R soient compatibles et que le réseau R communique la liste des mauvais payeurs.

Toutefois, dans la logique des systèmes classiques, il est possible que la chaîne A délègue complètement la gestion de ses abonnés (sur le réseau R) au réseau R. Cette solution présente l'inconvénient de demander à la chaîne A de faire totalement confiance au réseau R sur le plan commercial. A défaut de cette solution, le réseau R pourra toujours déléguer un technicien pour sceller la prise de l'abonné...

Le système proposé permet de résoudre de façon élégante ce cas en liant la possibilité de recevoir la chaîne A chez l'abonné X à une information "accord" du réseau R. Par ce principe, le réseau R peut autoriser ou non l'accès à A, sans avoir à demander à la chaîne d'agir. En outre, la durée des autorisations pourra être différente.

La mise en oeuvre de cette solution demandera à la chaîne A de créer un abonnement d'une durée définie et soumis à une condition qui sera accordée par le réseau R.

La création de tels liens pourra être variable selon les clients, permettant de moduler le schéma d'autorisation des clients en fonction de la distribution du signal. De cette façon, un client Y pourra être abonné par le signal original de la chaîne A, alors que le client X passera par le réseau R.

C. Durée du contrat et paiement

Selon la définition classique des abonnements, la période contractuelle correspond à la période de paiement, à savoir que pour un abonnement d'une année, le paiement sera annuel.

Pour faciliter la prise d'abonnement, certaines entreprises ont fait intervenir la possibilité d'effectuer un paiement fractionné.

En télévision à péage cela pose un problème lorsque la durée du contrat est d'une année, alors que le paiement est mensuel. En effet, si l'on confère un droit d'une année et que le client ne paie pas après un mois, il sera nécessaire de supprimer le droit sur la carte à mémoire. Toutefois, il n'est pas possible d'être certain que la carte ait bien reçu le message de suppression et il faudra le répéter fréquemment durant toute la durée du contrat. La parade à ce problème consiste à donner des droits plus courts (2 mois) et de les prolonger régulièrement ; cependant, cette solution présente l'inconvénient de ne pas refléter la réalité du contrat (ce qui sera visible lors de la consultation des droits).

Le système proposé permet quant à lui de considérer un contrat annuel avec, pour être valable, une condition qui est que le paiement soit réalisé. On disposera d'un contrat valable un an avec une autorisation "d'utilisation" mensuelle correspondant au paiement mensuel. Cette solution correspond d'ailleurs à la définition contractuelle précise.

D. Distributions multiples

La vision classique des systèmes de télévision à péage prévoit que chaque "opérateur" dispose d'un accès direct à une zone réservée chez chaque abonné. Cette vision oblige l'opérateur à gérer lui-même chaque abonné.

Le système proposé permet à un opérateur de déléguer la fonction de gestion d'un sous-ensemble d'abonnés. Cela signifie qu'une chaîne A peut déléguer la gestion d'une partition de cartes pour les abonnés au réseau R1 (à condition d'avoir les coordonnées "carte à mémoire" des abonnés) et de déléguer la gestion d'une autre partition à un réseau R2.

Dans ce cas, les réseaux R1 et R2 géreront de façon indépendante les abonnés à la chaîne A. En outre, ils auront la possibilité d'inclure la chaîne A dans un "package" de chaîne, et ceci de façon indépendante entre R1 et R2. Par cette délégation, il est possible à la chaîne A d'offrir un "ensemble" de N abonnements qui seront gérés, facturation comprise, par un sous-opérateur.

Le système permet également à une chaîne A de gérer l'ensemble de ses abonnés alors que la fonction de codage des émissions est déléguée à une ou plusieurs autres entreprises.

E. Structure auto-porteuse

Selon le modèle classique, l'opérateur détient l'ensemble des secrets correspondant à chaque carte à mémoire. L'envoi de messages entre l'émission et une carte à mémoire se fait en indiquant les références des clés cryptologiques à utiliser, typiquement le numéro de clé de gestion ou de clé de service. Ce concept est bien répandu dans les systèmes avec communication point à point, cependant il devient difficile à gérer lorsque l'architecture devient plus complexe.

Le système proposé fait appel à la notion de clés rattachées à un type d'information sur une période de temps, à savoir que les informations relatives à un certain lien seront communiquées durant une période donnée en utilisant une certaine clé. Il est également possible d'avoir plusieurs clés simultanément valables.

Ce concept permet de ne pas nécessiter l'envoi de la référence de la clé utilisée lors d'une transaction, en en simplifiant la gestion. Le système de cryptage, qui pourra être décentralisé ne devra connaître que la clé de cryptage pour envoyer les informations, sans avoir à indiquer les références.

F. Fonction "Banque"

Les systèmes classiques prévoient une gestion de crédit propre à chaque opérateur. Le crédit est alimenté par chaque opérateur et est utilisable exclusivement pour des débits relatifs à cet opérateur (par l'abonné).

Le système proposé permet de créer une notion d'opérateur "banque" qui peut gérer un crédit commun à un certain nombre d'opérateurs et qui peut être rattaché à certains liens.

La fonction banque fera payer l'établissement d'un lien ; en échange, elle autorisera son utilisation.

EXEMPLES COMPARATIFS DANS LE DOMAINE DE LA TELEVISION A PEAGE - CONTRAT MULTI-CHAINE

Système classique :

Traditionnellement, un contrat d'abonnement multi-canaux est traité par la tenue à jour de droits indépendants pour chaque canal. Si X est abonné aux canaux A, B et C, la carte à mémoire de son décodeur recevra indépendamment les droits d'accès aux canaux A, B et C pour une durée limitée, correspondant en principe à la durée de paiement. A la réception de chaque paiement, l'opérateur enverra de nouveaux droits correspondant à la période payée. Selon cette méthode, la carte de l'abonné recevra autant de messages qu'elle a d'abonnements, plus des messages relatifs aux clés de cryptage à utiliser.

En cas de non paiement, les droits ne seront pas reconduits à l'échéance suivante et/ou les ordres d'annulation seront envoyés.

En cas de non reconduction du contrat, les droits ne seront pas renouvelés.

En cas d'adjonction d'un canal au contrat, il faudra gérer les droits correspondants à chaque échéance (une commande de plus).

<u>Système selon l'invention</u> :

L'opérateur responsable de la diffusion des trois canaux créera un noyau contrat de base, lié à l'opérateur (pour définir la paternité), à un descripteur des trois canaux choisis, à la durée du contrat et à une variable paiement qui sera gérée par un opérateur responsable de l'encaissement des abonnements.

A chaque paiement, l'opérateur responsable de l'encaissement étendra la validité du lien de la période ainsi couverte.

Lors de chaque reconduction du contrat, l'opérateur responsable de la diffusion reconduira simplement la validité du lien "durée du contrat".

En cas de non-paiement, l'opérateur responsable de l'encaissement ne renouvellera pas le lien de paiement et/ou le détruira.

En cas de non-renouvellement du contrat, l'opérateur responsable de la diffusion ne renouvellera pas la durée du contrat.

En cas d'adjonction d'un nouveau canal au contrat, il suffira d'ajouter le nouveau canal avec un lien vers le contrat précédent, puis tout sera implicite lors des opérations subséquentes.

La principale différence entre les deux conceptions provient de la différence entre le cas classique du système de gestion (l'opérateur doit créer une image de la carte à mémoire pour la transférer intégralement) et le concept selon l'invention qui permet de n'envoyer que des modifications. En outre, si dans le modèle classique le centre de gestion de l'opérateur contrôle simultanément le contrat et le paiement, dans le second cas ces deux fonctions peuvent être traitées par deux centres distincts.

<u>EXEMPLES COMPARATIFS DANS LE DOMAINE DE LA CARTE BANCAIRE - CONCEPT DE CREDIT</u>

<u>Système classique :</u>

Le concept classique considère qu'une carte à mémoire bancaire est "mono-opérateur", ce qui signifie que la carte possède une identité liée qu'à un seul organisme. La notion de mot de passe ou d'algorithme de chiffrement est directement rattachée à cet opérateur, ce qui signifie que l'opérateur a une visibilité sur le mot de passe du porteur de carte.

L'utilisation d'une telle carte se complique lorsqu'il est nécessaire de permettre l'emploi de la carte sur des systèmes ne dépendant pas de l'opérateur. Dans un tel cas, l'opérateur devra soit dévoiler ses secrets à d'autres opérateurs, soit établir une connexion en temps réel avec eux.

Alternativement, il sera possible de créer une zone réservée à chaque opérateur, cependant une telle structure ne permet pas de bloquer le compte en cas de dépassement de la limite de crédit.

Nous aurons donc dans tous les cas un système lourd et contraignant.

<u>Système selon l'invention :</u>

En admettant que le détenteur de carte X possède un compte à la banque A et désire pouvoir retirer de l'argent aux banques B et C et de disposer d'un concept carte de crédit du pool P, l'émetteur va générer les zones opérateur suivantes sur la carte à mémoire :

X : Zone du porteur
A : Zone de la banque gérant le compte
B : Zone de la banque B
C : Zone de la banque C
P : Zone du pool P

La zone X contiendra un lien conditionnel qui s'établira contre la présentation du mot de passe du porteur. Le lien ne pourra être considéré comme valable que si le mot de passe correct est introduit.

La zone A contiendra l'état du compte et un lien vers la zone X pour demander le mot de passe, un lien conditionnel vers les zones B, C et P, un lien pour la fonction débit de crédit du compte A et une liaison vers les fonctions de cryptage entre (A et B), (A et C) et (A et P). L'établissement de ces liens se fera contre un échange de cryptogrammes validés par les fonctions de cryptage.

Le zones B, C et P contiendront un lien conditionnel avec la zone A, un lien avec les fonctions de cryptage vers A, un lien avec la fonction de cryptage vers le monde extérieur et un lien définissant une demande de débit. L'établissement de ces liens se fera contre un échange de cryptogrammes validés par les fonctions de cryptage.

L'échange-type se fera comme suit :

1. Le porteur introduit sa carte dans le lecteur de l'opérateur P.

2. L'opérateur identifie la zone P par un échange de cryptogramme et demande un lien avec la fonction débit de crédit D.

3. La zone P établit le lien avec l'opérateur externe, mais définit que pour que le lien soit valable, il doit être complété par un lien vers la zone A.

4. La zone A reçoit la demande de lien de P, mais définit que ce lien nécessite un lien vers la zone X et un lien "débit de crédit".

5. La zone X reçoit la demande de lien de A mais nécessite que le mot de passe soit présenté. La zone X demandera au lecteur de présenter le mot de passe.

6. Si le mot de passe correct est présenté, la zone X accordera le lien avec la zone A.

7. La zone A pourra alors établir un lien conditionnel avec la zone P, sous réserve de débit.

8. La zone P pourra alors fermer le lien avec l'opérateur externe.

9. La fonction demande de débit pourra être exécutée en échange du débit de crédit de la zone A.

10. La fonction de débit fournira un cryptogramme d'autorisation vers la zone P.

11. La zone P fournira un cryptogramme d'autorisation vers l'opérateur externe.

12. L'opérateur externe fournira un cryptogramme de quittance vers la zone P.

13. La zone P fournira un cryptogramme de quittance à la zone A.

14. La zone A fournira un cryptogramme de quittance à la zone X.

L'ensemble des opérations réalisées entre les zones se fait de façon cryptée afin de garantir l'authenticité des intervenants.

Par ce concept, il est possible d'avoir des échanges d'informations à l'intérieur de la carte à mémoire selon une logique prédéfinie et entre parties ayant des rapports contractuels.

Il ne sera pas possible à l'opérateur d'une zone de connaître les secrets d'un autre opérateur, car tous les échanges d'informations se feront en fonction des liens prédéfinis et couverts par des échanges "cryptés".

EXEMPLES COMPARATIFS DANS LE DOMAINE DU DECRYPTAGE SOUS CONDITION

Les systèmes de contrôle d'accès demandent à effectuer le décryptage d'une information en fonction de critères d'accès qui autorisent un tel décryptage.

Système classique :

Les solutions classiques prévoient qu'une carte à mémoire délivre le résultat d'un décryptage si un opérateur envoie un message crypté et que des conditions d'accès soient remplies. Les conditions d'accès sont définies au départ, par exemple droits d'accès avec limite de date, numéro de référence et clé de décryptage valide. Si ces conditions sont remplies, la carte à mémoire pourra délivrer l'information décryptée. Ce schéma prévoit que les informations soient mémorisées dans des cases spécialisées pour chaque type d'information. Cette solution présente la limitation de ne fonctionner que dans la limite de la zone réservée à un opérateur et de ne pas permettre de redéfinir après coup de nouvelles conditions d'accès.

Système selon l'invention :

La solution selon l'invention fonctionne selon un concept où les conditions sont définies sous forme d'un programme écrit dans un langage de type SQL. Cela signifie que les conditions d'accès pourront être modulées à loisir, en faisant intervenir au besoin des données résidentes chez d'autres opérateurs.

La délivrance d'une information décryptée ne pourra avoir lieu que si le programme réussit tous les tests nécessaires, tels que définis. Il est également possible de définir plusieurs chemins qui pourront aboutir à la délivrance de l'information.

Usuellement, le programme qui traitera l'information sera compilé et ne pourra pas être modifié. Cependant, pour permettre des modifications subséquentes, il sera possible de télécharger un nouveau programme compilé (par un organisme suprême) et/ou d'autoriser un opérateur à télécharger un programme "à interpréter" lui permettant de définir un nouveau schéma d'accès.

**Revendications**

**1.** Système destiné à gérer le stockage d'informations et l'exécution de programmes spécifiques, le système comprenant :

- au moins une unité de gestion (14),
- plusieurs cartes à mémoire (10) chacune comprenant une mémoire inscriptible (28 - Z2) destinée à stocker au moins certaines informations sous forme d'instructions (A1, A2...An) et une mémoire (Z1) destinée à stocker au moins un dit programme spécifique (PS-1, PS-2, PS-3), et
- au moins un moyen de communication de données (12) pouvant établir une communication de données entre au moins une unité de gestion (14) et chaque carte à mémoire (10), afin de transmettre un certain nombre d'instructions (A1, A2...An) qui sont destinées à être stockées ou a être utilisées dans une carte à mémoire (10) lorsque cette carte est connectée à une unité de gestion,

caractérisé en ce que : chaque carte à mémoire (10) connectée à un instant quelconque à au moins une unité de gestion (14) via un moyen de communication (12) comporte dans ladite mémoire inscriptible (28) un ensemble des informations constitué par le stockage aux emplacements quelconques (Z2) des informations successives reçues de l'unité de gestion (14) ou de plusieurs unités de gestion (14), l'ensemble des informations (A1, A2...An) comprenant des liens logiques reliant ou permettant une liaison entre des informations stockées, quel que soit leur emplacement ou leur ordre d'arrivée, et éventuellement aussi une liaison avec d'autres informations, constituant ainsi au sein de la carte (10) une base de données relationnelles, l'ensemble de cartes connectées simultanément formant aussi une base de données relationnelles, et ledit programme spécifique (PS-1,PS-2,PS-3) est agencé à passer en revue l'ensemble des informations (A1, A2...An) de la base de données relationnelles constituée au sein de la carte (10) de manière à effectuer au moins une opération spécifique avec des informations reliées entre elles par au moins un lien logique.

2. Système selon la revendication 1, caractérisé en ce que :

- la base de données relationnelles constituée au sein de la carte est formée, d'une part, par des informations (A1,A2,A3) pré-stockées dans la mémoire inscriptible (28), et, d'autre part, par des informations reçues (A4,A5,A6) d'une ou plusieurs unités de gestion d'informations (14),
- les liens logiques de ladite base de données relationnelles constituée au sein de la carte étant contenus, soit dans les informations pré-stockées, soit dans les informations reçues, soit dans les deux, de manière à ce que le ou chaque programme spécifique (PS-1,PS-2,PS-3) ne puisse effectuer une opération spécifique que lorsque la base de données relationnelles a été constituée au sein de la carte (10) par ladite connection.

3. Système selon la revendication 1 ou 2, caractérisé en ce que :

- chacune desdites cartes à mémoire (10) comprend un moyen de pilotage (24) de la mémoire inscriptible (28) agencé pour effectuer, à l'instant où la carte à mémoire (10) est connectée à l'au moins une unité de gestion (14), les opérations suivantes :

  -- commande de la mémoire inscriptible (28) pour qu'elle stocke chaque instruction arrivante (A1,A2,..., An ), en provenance de l'unité de gestion (14), dans des emplacements mémoire quelconques,
  -- recherche préalable, lors d'une arrivée d'une dite instruction (A1,A2,...,An), pour déterminer si oui ou non cette instruction arrivante est déjà stockée dans la mémoire inscriptible (28), et stockage de cette instruction arrivante en un emplacement quelconque de la mémoire inscriptible uniquement si cette instruction arrivante n'est pas déjà stockée dans la mémoire inscriptible,

- en ce que chaque dite instruction (A1,A2,...,An) est constituée par :

  -- soit au moins une donnée numérique,
  -- soit une donnée de lien logique qui permet d'établir un lien logique entre au moins deux autres instructions ou au moins la présente instruction et au moins une autre instruction,
  -- soit une dite donnée de lien logique associée à au moins une donnée numérique,

- et en ce que la carte à mémoire (10) inclut un moyen pour commander l'exécution d'au moins un programme spécifique (PS-1,PS-2,PS-3) mémorisé dans la carte à mémoire en utilisant pour cette exécution au moins un ensemble logique constitué par toutes les instructions liées logiquement entre elles, sélectionnées parmi lesdites instructions stockées dans la mémoire inscriptible de la carte à mémoire.

**4.** Système selon la revendication 3, caractérisé en ce que chaque dite instruction (A1,A2,...,An) ou partie d'instruction qui est concernée par un dit lien logique est une instruction ou partie d'instruction qui, soit est stockée présentement dans la carte à mémoire (10), soit est destinée à être stockée ultérieurement dans la carte à mémoire.

**5.** Système selon la revendication 3, caractérisé en ce que chaque dite instruction (A1,A2,...,An) est stockée dans ladite mémoire inscriptible (28) de la carte à mémoire en associant à cette instruction un ou plusieurs codes d'indicateur permettant d'identifier par la suite ledit ou lesdits différents ensembles logiques ainsi constitués.

**6.** Système selon l'une quelconque des revendications précédentes, caractérisé en ce que ledit au moins un moyen de communication de données (12) permet de transférer des données uniquement dans le sens allant d'une unité de gestion (14) jusqu'à une carte à mémoire (10) quelconque lorsqu'elle est connectée à cette unité.

**7.** Système selon la revendication 6, caractérisé en ce que ledit système est un système d'accès contrôlé tel qu'un système de télévision à péage dans lequel :

chaque carte à mémoire (10) est une carte possédée par un abonné au système, connectable à un décodeur (16) du système pour permettre d'exécuter une fonction d'accès contrôlé,
ladite unité de gestion (14) constitue soit un service de gestion des cartes à mémoire soit une station de diffusion de signal vidéo brouillé, et
ledit moyen de communication de données (12) est constitué par une diffusion de données par voie hertzienne, par satellite ou par câble.

**8.** Système selon l'une quelconque des revendications précédentes, caractérisé en ce que :

ladite au moins une unité de gestion (14) comprend un moyen de cadencement agencé pour envoyer un groupe de dites instructions, de façon répétée, selon une période de répétition déterminée, dans ledit au moins un moyen de communication de données,
de telle sorte que toutes les cartes à mémoire (10) qui sont simultanément connectées à au moins une unité de gestion (14), à un instant donné quelconque, aient reçu, dans le laps de temps de ladite période de répétition, ledit groupe de dites instructions, toutes les cartes à mémoire qui sont ainsi simultanément connectées à cet instant constituant alors de façon opérationnelle une base de données relationnelles.

**9.** Procédé de gestion d'un stockage d'informations et d'une exécution de programmes spécifiques, le procédé comprenant les étapes suivantes :

- agencement d'au moins une unité de gestion (14),
- agencement de plusieurs cartes à mémoire (10),
- agencement d'au moins un moyen de communication de données (12) pouvant établir une communication de données entre au moins une unité de gestion (14) et chaque carte à mémoire (10), et
- transmission d'un certain nombre d'instructions via un desdits moyens de communication de données (12) de façon à ce que ces instructions soient stockées dans une carte à mémoire lorsque cette carte à mémoire (10) est connectée à une unité de gestion (14),

le procédé étant caractérisé en outre par les étapes suivantes :

- stockage d'au moins certaines desdites informations (A1,A2,...,An) dans une mémoire inscriptible (28) de chaque carte à mémoire, l'ensemble des informations stockées (A1,A2...An) étant constitué par le stockage à des emplacements quelconques (Z2) des informations successives reçues par connection de la carte (10), l'ensemble des informations (A1,A2,...,An) comprenant des liens logiques reliant ou permettant une liaison entre des informations stockées, quel que soit leur emplacement ou leur ordre d'arrivée, et éventuellement aussi une liaison avec d'autres informations, constituant ainsi au sein de la carte une base de données relationnelles, et
- stockage d'au moins un dit programme spécifique (PS-1,PS-2,PS-3) dans une mémoire (Z1) de chaque carte à mémoire (10), ledit programme (PS-1,PS-2,PS-3) étant agencé à passer en revue l'ensemble des informations (A1,A2,...,An) de la base de données relationnelles constituée au sein de la carte (10) de manière à effectuer au moins une opération spécifique avec des informations reliées entre elles par au moins un lien logique.

EP 0 616 714 B1

**10.** Procédé selon la revendication 9, caractérisé en ce qu'il comprend en outre les étapes suivantes :

- agencement dans chacune desdites cartes à mémoire (10) d'un moyen de pilotage (24) de la mémoire inscriptible (28) afin qu'il effectue, à l'instant où la carte à mémoire (10) est connectée à au moins une unité de gestion (14) les opérations suivantes :

    -- commande de la mémoire inscriptible (28) pour qu'elle stocke chaque instruction arrivante, en provenance de l'unité de gestion (14), dans des emplacements mémoire quelconques,
    -- recherche préalable, lors d'une arrivée d'une dite instruction (A1,A2,...,An), pour déterminer si oui ou non cette instruction arrivante est déjà stockée dans la mémoire inscriptible (28) et stockage de cette instruction arrivante en un emplacement quelconque de la mémoire inscriptible uniquement si cette instruction arrivante n'est pas déjà stockée dans la mémoire inscriptible,

- agencement de chaque dite instruction (A1,A2,...,An) de façon à ce qu'elle soit constituée par :

    -- soit au moins une donnée numérique,
    -- soit une donnée de lien logique qui permet d'établir un lien logique entre au moins deux autres instructions ou au moins la présente instruction et au moins une autre instruction,
    -- soit une dite donnée de lien logique associée à au moins une donnée numérique,

- et commande, dans la carte à mémoire (10), de l'exécution d'au moins un programme spécifique (PS-1,PS-2,PS-3) mémorisé dans la carte à mémoire en utilisant pour cette exécution au moins un ensemble logique constitué par toutes les instructions liées logiquement entre elles, sélectionnées parmi lesdites instructions (A1,A2,...,An) stockées dans la mémoire inscriptible (28) de la carte à mémoire.

**11.** Procédé selon l'une quelconque des revendications 9 ou 10, caractérisé en ce que lesdites informations (A1,A2,..., An) sont transmises entre au moins une unité de gestion (14) et les cartes à mémoire (10) selon un flux unidirectionnel allant depuis au moins une unité de gestion jusqu'aux cartes à mémoire.

**12.** Procédé selon l'une quelconque des revendications 9 ou 10, caractérisé en ce :

il est prévu au moins deux unités de gestion (14) différentes,
lesdites informations sont transmises entre les unités de gestion (14) et les cartes à mémoire (10) selon un flux bidirectionnel, et
certaines informations (A1,A2,..., An) sont, lors d'une première connexion d'une carte à mémoire avec une première unité de gestion, transmises depuis celle-ci jusque dans cette carte à mémoire, puis sont, lors d'une autre connexion simultanée ou ultérieure d'une carte à mémoire avec une autre unité de gestion, transmises depuis cette carte à mémoire jusque dans cette autre unité de gestion.

**13.** Carte à mémoire (10) du type carte télévision à péage, carte bancaire ou autre carte pour un système d'accès contrôlé ou semblable, comportant une mémoire inscriptible (28) stockant un ensemble d'informations (A1,A2,..., An), et au moins un programme (PS-1,PS-2,PS-3) destiné à effectuer des opérations spécifiques sur les informations stockées,
caractérisée en ce que l'ensemble des informations stockées est constitué par le stockage à des emplacements quelconques des informations successives reçues par connection de la carte, par un moyen de communication de données (12), à une ou plusieurs unités de gestion d'informations (14) d'un ou plusieurs systèmes d'accès contrôlés ou semblables,

l'ensemble des informations (A1,A2,...,An) comprenant des liens logiques reliant ou permettant une liaison entre des informations stockées, quel que soit leur emplacement ou leur ordre d'arrivée, et éventuellement aussi une liaison avec d'autres informations, constituant ainsi au sein de la carte (10) une base de données relationnelles,
ledit programme (PS-1,PS-2,PS-3) étant agencé à passer en revue l'ensemble des informations (A1,A2,..., An) de la base de données relationnelles constituée au sein de la carte (10) de manière à effectuer au moins une opération spécifique avec des informations reliées entre elles par au moins un lien logique.

**14.** Carte à mémoire selon la revendication 13, caractérisée en ce que

la base de données relationnelles est formée, d'une part, par des informations (A1,A2,A3) pré-stockées dans la mémoire (28), et, d'autre part, par des informations reçues (A4,A5,A6) d'une ou plusieurs unités de gestion d'informations (14),

les liens logiques de la base de données relationnelles étant contenus, soit dans les informations pré-stockées, soit dans les informations reçues, soit dans les deux, de manière à ce que le ou chaque programme (PS-1,PS-2,PS-3) ne puisse effectuer une opération spécifique que lorsque la base de données relationnelles a été constituée au sein de la carte (10) par ladite connection.

15. Carte à mémoire selon la revendication 13 ou 14, caractérisée en ce qu'elle comprend un moyen de pilotage (24) de la mémoire inscriptible (28) agencé pour effectuer, à l'instant où la carte (10) est connectée à l'au moins une unité de gestion (14), les opérations suivantes :

-- commande de la mémoire inscriptible (28) pour qu'elle stocke chaque instruction arrivante (A1,A2...An), en provenance de l'unité de gestion (14), dans des emplacements mémoire quelconques (Z2),

-- recherche préalable, lors d'une arrivée d'une dite instruction, pour déterminer si oui ou non cette instruction arrivante est déjà stockée dans la mémoire inscriptible (28), et stockage de cette instruction arrivante en un emplacement quelconque (Z2) de la mémoire inscriptible uniquement si cette instruction arrivante n'est pas déjà stockée dans la mémoire inscriptible.

16. Groupe de cartes à mémoire selon la revendication 14 ou 15, caractérisé en ce que l'ensemble constitué par plusieurs cartes à mémoire (10) qui sont à un instant quelconque connectées simultanément à une unité de gestion (14) via un moyen de communication de données (12) constitue à cet instant une base de données relationnelles.

17. Utilisation d'une ou plusieurs cartes à mémoire selon l'une quelconque des revendications 13, 14 ou 15, ou d'un groupe de cartes à mémoire selon la revendication 16, pour gérer l'accès dans un système d'accès contrôlé tel qu'un système de télévision à péage ou un système bancaire.

18. Utilisation selon la revendication 17 pour un système de télévision à péage, caractérisé en ce que lesdites informations sont transmises entre au moins une unité de gestion (14) et les cartes à mémoire (10) selon un flux unidirectionnel allant depuis au moins une unité de gestion (14) jusqu'aux cartes à mémoire (10).

19. Utilisation selon la revendication 17 pour un système bancaire, caractérisé en ce qu'il est prévu au moins deux unités de gestion différentes (14), et lesdites informations sont transmises entre les unités de gestion (14) et les cartes à mémoire (10) selon un flux bidirectionnel.

20. Utilisation selon la revendication 19, caractérisé en ce que certaines informations sont, lors d'une première connexion d'une carte à mémoire avec une première unité de gestion, transmises depuis celle-ci jusque dans cette carte à mémoire, puis sont, lors d'une autre connexion simultanée ou ultérieure d'une carte à mémoire avec une autre unité de gestion, transmises depuis cette carte à mémoire jusque dans cette autre unité de gestion.

**Patentansprüche**

1. Zur Verwaltung der Datenspeicherung und der Ausführung spezifischer Programme bestimmtes System mit

- zumindest einer Verwaltungseinheit (14),

- mehreren Speicherkarten (10) mit je einem zur Speicherung von zumindest bestimmten Daten in der Form von Befehlen (A1, A2, ..., An) bestimmten, beschreibbaren Speicher (28 - Z2) sowie je einem zur Speicherung von zumindest einem der benannten spezifischen Programme (PS-1, PS-2, PS-3) bestimmten Speicher (Z1) und

- zumindest einem Datenübertragungsorgan (12), das eine Datenübertragung zwischen zumindest einer Verwaltungseinheit (14) und jeder Speicherkarte (10) aufbauen kann, um eine bestimmte Anzahl von Befehlen (A1, A2, ..., An) zu übermitteln, die dafür bestimmt sind, in einer Speicherkarte (10) gespeichert oder verwendet zu werden, während diese Karte mit einer Verwaltungseinheit verbunden ist,

dadurch gekennzeichnet, dass jede zu irgend einem Zeitpunkt über ein Übertragungsorgan (12) mit zumindest einer Verwaltungseinheit (14) verbundene Speicherkarte (10) in dem benannten beschreibbaren Speicher (28) einen Datensatz enthält, der durch die Speicherung von aufeinanderfolgenden, von der Verwaltungseinheit (14) oder von mehreren Verwaltungseinheiten (14) empfangenen Daten an beliebigen Adressen (Z2) erstellt wurde, wobei der Datensatz (A1, A2, ..., An) logische Verknüpfungen enthält, die eine Verknüpfung zwischen den gespeicherten Daten ohne Rücksicht auf ihre Adresse oder die Reihenfolge ihres Eintreffens herstellen oder herzustellen gestatten, eventuell auch eine Verknüpfung mit anderen Daten, wodurch in der Karte (10) eine Vergleichsdatenbank erstellt wird, und wobei der Satz gleichzeitig verbundener Karten ebenfalls eine Vergleichscatenbank bildet; und dass das benannte spezifische Programm (PS-1, PS-2, PS-3) dafür eingerichtet ist, den Datensatz (A1, A2, ..., An) der in der Karte (10) erstellten Vergleichsdatenbank so abzufragen, dass mit den untereinander durch zumindest eine logische Verknüpfung verknüpften Daten zumindest eine spezifische Operation ausgeführt werden kann.

2. System gemäss Anspruch 1, dadurch gekennzeichnet, dass

- die in der Karte erstellte Vergleichsdatenbank einerseits aus im beschreibbaren Speicher (28) vorgespeicherten Daten (A1, A2, A3) und andererseits aus von einer oder mehreren Datenverwaltungseinheiten (14) empfangenen Daten (A4, A5, A6) gebildet wird,

- wobei die logischen Verknüpfungen der benannten, in der Karte erstellten Vergleichsdatenbank entweder in den vorgespeicherten Daten oder in den empfangenen Daten oder in beiden enthalten sind, so dass eine spezifische Operation durch das oder jedes spezifische Programm (PS-1, PS-2, PS-3) nur ausgeführt werden kann, wenn die Vergleichsdatenbank durch die benannte Verbindung in der Karte (10) erstellt worden ist.

3. System gemäss Anspruch 1 oder Anspruch 2, dadurch gekennzeichnet,

- dass jede der benannten Speicherkarten (10) ein Steuerorgan (24) für den beschreibbaren Speicher (28) umfasst, das dafür eingerichtet ist, zu dem Zeitpunkt, zu dem die Speicherkarte (10) mit zumindest einer Verwaltungseinheit (14) verbunden ist, die folgenden Operationen auszuführen:

-- Anweisung an den beschreibbaren Speicher (28), jeden von der Verwaltungseinheit (14) her ankommenden Befehl (A1, A2, ..., An) an irgend einer Speicheradresse zu speichern,

-- Voruntersuchung bei Eintreffen eines der benannten Befehle (A1, A2, ..., An), um zu bestimmen, ob dieser ankommende Befehl bereits im beschreibbaren Speicher (28) gespeichert ist oder nicht, und Speicherung dieses ankommenden Befehls an irgend einer Adresse des beschreibbaren Speichers, einzig und allein wenn dieser ankommende Befehl noch nicht im beschreibbaren Speicher gespeichert ist,

- und dass jeder der benannten Befehle (A1, A2, ..., An) aus

-- entweder zumindest einer numerischen Grösse

-- oder einer logischen Verknüpfungsgrösse, die es gestattet, eine logische Verknüpfung zwischen zumindest zwei anderen Befehlen oder zumindest dem vorliegenden Befehl und zumindest einem anderen Befehl aufzubauen,

-- oder einer der benannten logischen Verknüpfungsgrössen in Gesellschaft mit zumindest einer numerischen Grösse

besteht und

- dass die Speicherkarte (10) ein Organ einschliesst, um den Ablauf von zumindest einem in der Speicherkarte gespeicherten spezifischen Programm (PS-1, PS-2, PS-3) anzuweisen, wobei für diesen Ablauf zumindest ein logischer Befehlssatz verwendet wird, der aus allen logisch untereinander verknüpften und unter den benannten, im beschreibbaren Speicher der Speicherkarte gespeicherten Befehlen ausgewählten Befehlen erstellt wurde.

4. System gemäss Anspruch 3, dadurch gekennzeichnet, dass jeder der benannten Befehle (A1, A2, ..., An) oder Teilbefehle, der von einer der benannten logischen Verknüpfungen betroffen ist, ein Befehl oder Teilbefehl ist, der entweder zum gegenwärtigen Zeitpunkt in der Speicherkarte (10) gespeichert oder dazu bestimmt ist, später in der Speicherkarte gespeichert zu werden.

5. System gemäss Anspruch 3, dadurch gekennzeichnet, dass jeder der benannten Befehle (A1, A2, ..., An) so in dem benannten, beschreibbaren Speicher (28) der Speicherkarte gespeichert wird, dass diesem Befehl ein oder mehrere Erkennungscodes beigeordnet werden, die es in der Folge gestatten, den oder die verschiedenen benannten, so erstellten logischen Befehlssätze zu erkennen.

6. System gemäss einem beliebigen der vorangehenden Ansprüche, dadurch gekennzeichnet, dass das benannte, zumindest eine Datenübertragungsorgan (12) die Datenübertragung einzig und allein in der Richtung von einer Verwaltungseinheit (14) bis zu einer beliebigen Speicherkarte (10) gestattet, wenn diese mit dieser Einheit verbunden ist.

7. System gemäss Anspruch 6, dadurch gekennzeichnet, dass das benannte System ein System für kontrollierten Zugriff wie zum Beispiel ein Mautfernsehsystem ist, worin

jede Speicherkarte (10) eine im Besitz eines Systemabonnenten befindliche Karte ist, die mit einem Systemdecoder (16) verbunden werden kann, um eine kontrollierte Zugriffsfunktion ausführen zu können,

die benannte Verwaltungseinheit (14) entweder ein Speicherkartenverwaltungsdienst oder eine Sendestation für ein invertiertes Fernsehsignal ist und

das benannte Datenübertragungsorgan (12) durch einen Datenfunk mit elektromagnetischen Wellen, Satellit oder Kabel gegeben ist.

8. System gemäss einem beliebigen der vorangehenden Ansprüche, dadurch gekennzeichnet, dass

die benannte, zumindest eine Verwaltungseinheit (14) ein Taktsteuerungsorgan umfasst, das dafür eingerichtet ist, eine Gruppe der benannten Befehle in einem bestimmten Takt wiederholt in das benannte, zumindest eine Datenübertragungsorgan einzuspeisen,

und zwar so, dass alle Speicherkarten (10), die zu irgend einem Zeitpunkt gleichzeitig mit zumindest einer Verwaltungseinheit (14) verbunden sind, innerhalb einer Periode des benannten Taktes die benannte Gruppe von Befehlen empfangen hat, wobei alle Speicherkarten, die also zu diesem Zeitpunkt gleichzeitig verbunden sind, dann eine betriebsbereite Vergleichsdatenbank bilden.

9. Verfahren zur Verwaltung einer Datenspeicherung und eines Ablaufs spezifischer Programme, das die folgenden Schritte umfasst:

- Einrichtung von zumindest einer Verwaltungseinheit (14),

- Einrichtung mehrerer Speicherkarten (10),

- Einrichtung von zumindest einem Datenübertragungsorgan (12), das eine Datenübertragung zwischen zumindest einer Verwaltungseinheit (14) und jeder Speicherkarte (10) aufbauen kann, und

- Übermittlung einer bestimmten Anzahl von Befehlen über eines der benannten Datenübertragungsorgane (12), und zwar in der Weise, dass diese Befehle in einer Speicherkarte gespeichert werden, während diese Speicherkarte (10) mit einer Verwaltungseinheit (14) verbunden ist,

und ausserdem durch die folgenden Schritte gekennzeichnet ist:

- Speicherung von zumindest bestimmten der benannten Daten (A1, A2, ..., An) in einem beschreibbaren Speicher (28) jeder Speicherkarte, wobei der Satz der gespeicherten Daten (A1, A2, ..., An) durch Speicherung an beliebigen Adressen (Z2) der durch Verbindung der Karte (10) empfangenen aufeinanderfolgenden Daten erstellt wird und der Datensatz (A1, A2, An) logische Verknüpfungen enthält, die eine Verknüpfung zwischen den gespeicherten Daten ohne Rücksicht auf ihre Adresse oder die Reihenfolge ihres Eintreffens herstellen oder herzustellen gestatten, eventuell auch eine Verknüpfung mit anderen Daten, wodurch in der Karte eine Vergleichsdatenbank erstellt wird, und

- Speicherung von zumindest einem der benannten spezifischen Programme (PS-1, PS-2, PS-3) in einem Speicher (Z1) jeder Speicherkarte (10), wobei das benannte Programm (PS-1, PS-2, PS-3) dafür eingerichtet ist, den Datensatz (A1, A2, ..., An) der in der Karte (10) erstellten Vergleichsdatenbank so abzufragen, dass mit den untereinander durch zumindest eine logische Verknüpfung verknüpften Daten eine spezifische Operation ausgeführt werden kann.

10. Verfahren gemäss Anspruch 9, dadurch gekennzeichnet, dass es ausserdem die folgenden Schritte umfasst:

- Einrichtung eines Steuerungsorgans (24) für den beschreibbaren Speicher (28) in jeder der benannten Speicherkarten (10), damit zu dem Zeitpunkt, zu dem die Speicherkarte (10) mit zumindest einer Verwaltungseinheit (14) verbunden ist, die folgenden Operationen ausgeführt werden:

  -- Anweisung an den beschreibbaren Speicher (28), jeden von der Verwaltungseinheit (14) her ankommenden Befehl an irgend einer Speicheradresse zu speichern,

  -- Voruntersuchung bei Eintreffen eines der benannten Befehle (A1, A2, ..., An), um zu bestimmen, ob dieser ankommende Befehl bereits im beschreibbaren Speicher (28) gespeichert ist oder nicht, und Speicherung dieses ankommenden Befehls an irgend einer Adresse des beschreibbaren Speichers, einzig und allein wenn dieser ankommende Befehl noch nicht im beschreibbaren Speicher gespeichert ist,

- Einrichtung jedes der benannten Befehle (A1, A2, ..., An) dergestalt, dass er aus

  -- entweder zumindest einer numerischen Grösse

  -- oder einer logischen Verknüpfungsgrösse, die es gestattet, eine logische Verknüpfung zwischen zumindest zwei anderen Befehlen oder zumindest dem vorliegenden Befehl und zumindest einem anderen Befehl aufzubauen,

  -- oder einer der benannten logischen Verknüpfungsgrössen in Gesellschaft mit zumindest einer numerischen Grösse

  besteht und

- Anweisung in der Speicherkarte (10), dass zumindest eines der in der Speicherkarte gespeicherten spezifischen Programme (PS-1, PS-2, PS-3) abläuft, wobei für diesen Ablauf zumindest ein logischer Befehlssatz verwendet wird, der aus allen logisch untereinander verknüpften Befehlen erstellt wurde, die unter den benannten, im beschreibbaren Speicher (28) der Speicherkarte gespeicherten Befehlen (A1, A2, ..., An) ausgewählt wurden.

11. Verfahren gemäss einem beliebigen der Ansprüche 9 und 10, dadurch gekennzeichnet, dass die benannten Daten (A1, A2, ..., An) zwischen zumindest einer Verwaltungseinheit (14) und den Speicherkarten (10) einem von zumindest einer Verwaltungseinheit bis zu den Speicherkarten einseitig gerichteten Fluss zufolge übermittelt werden.

12. Verfahren gemäss einem beliebigen der Ansprüche 9 und 10, dadurch gekennzeichnet, dass

zumindest zwei verschiedene Verwaltungseinheiten (14) vorgesehen sind,

die benannten Daten zwischen den Verwaltungseinheiten (14) und den Speicherkarten (10) einem zweiseitig gerichteten Fluss zufolge übermittelt werden und

bestimmte Daten (A1, A2, ..., An) bei einer ersten Verbindung einer Speicherkarte mit einer ersten Verwaltungseinheit von dieser bis zu dieser Karte und dann bei einer weiteren gleichzeitigen oder nachfolgenden Verbindung einer Speicherkarte mit einer anderen Verwaltungseinheit von dieser Speicherkarte bis zu dieser anderen Verwaltungseinheit übermittelt werden.

13. Speicherkarte (10) vom Typ der Mautfernsehkarte, Bankkarte oder anderer Karten für ein System mit kontrolliertem Zugriff oder dergleichen, die einen beschreibbaren Speicher (28) umfasst, der einen Datensatz (A1, A2, ..., An) und zumindest ein Programm (PS-1, PS-2, PS-3) zur Ausführung spezifischer Operationen mit den gespeicherten Daten speichert,

dadurch gekennzeichnet, dass der Satz der gespeicherten Daten durch die Speicherung von aufeinanderfolgenden Daten an beliebigen Adressen erstellt wird, wobei diese Daten durch Verbindung der Karte mittels eines Datenübertragungsorgans (12) mit einer oder mehreren Datenverwaltungseinheiten (14) eines oder mehrerer Systeme mit kontrolliertem Zugriff oder dergleichen empfangen wurden,

während der Datensatz (A1, A2, ..., An) logische Verknüpfungen umfasst, die eine Verknüpfung zwischen den gespeicherten Daten ohne Rücksicht auf ihre Adresse oder die Reihenfolge ihres Eintreffens herstellen oder herzustellen gestatten, eventuell auch eine Verknüpfung mit anderen Daten, wodurch in der Karte (10) eine Vergleichsdatenbank erstellt wird,

wobei das benannte Programm (PS-1, PS-2, PS-3) dafür eingerichtet ist, den Datensatz (A1, A2, ..., An) der in der Karte (10) erstellten Vergleichsdatenbank so abzufragen, dass mit den untereinander durch zumindest eine logische Verknüpfung verknüpften Daten zumindest eine spezifische Operation ausgeführt werden kann.

14. Speicherkarte gemäss Anspruch 13, dadurch gekennzeichnet, dass

die Vergleichsdatenbank einerseits aus im beschreibbaren Speicher (28) vorgespeicherten Daten (A1, A2, A3) und andererseits aus von einer oder mehreren Datenverwaltungseinheiten (14) empfangenen Daten (A4, A5, A6) gebildet wird,
wobei die logischen Verknüpfungen der Vergleichsdatenbank entweder in den vorgespeicherten Daten oder in den empfangenen Daten oder in beiden enthalten sind, so dass eine spezifische Operation durch das oder jedes Programm (PS-1, PS-2, PS-3) nur ausgeführt werden kann, wenn die Vergleichsdatenbank durch die benannte Verbindung in der Karte (10) erstellt worden ist.

15. Speicherkarte gemäss Anspruch 13 oder 14, dadurch gekennzeichnet, dass sie ein Steuerungsorgan (24) für den beschreibbaren Speicher (28) umfasst, wobei dieses Organ dafür eingerichtet ist, zu dem Zeitpunkt, zu dem die Karte (10) mit zumindest einer Verwaltungseinheit (14) verbunden ist, die folgenden Operationen auszuführen:

-- Anweisung an den beschreibbaren Speicher (28), jeden von der Verwaltungseinheit (14) her ankommenden Befehl (A1, A2, ..., An) an irgend einer Speicheradresse (Z2) zu speichern,

-- Voruntersuchung bei Eintreffen eines der benannten Befehle, um zu bestimmen, ob dieser ankommende Befehl bereits im beschreibbaren Speicher (28) gespeichert ist oder nicht, und Speicherung dieses ankommenden Befehls an irgend einer Adresse (Z2) des beschreibbaren Speichers, einzig und allein wenn dieser ankommende Befehl noch nicht im beschreibbaren Speicher gespeichert ist.

16. Speicherkartensatz gemäss Anspruch 14 oder 15, dadurch gekennzeichnet, dass der Satz, der aus mehreren Speicherkarten (10) zusammengesetzt ist, die zu einem beliebigen Zeitpunkt gleichzeitig über ein Datenübertragungsorgan (12) mit einer Verwaltungseinheit (14) verbunden sind, zu diesem Zeitpunkt eine Vergleichsdatenbank darstellt.

17. Verwendung einer oder mehrerer Speicherkarten gemäss einem beliebigen der Ansprüche 13, 14 oder 15 oder eines Satzes von Speicherkarten gemäss Anspruch 16, um den Zugriff zu einem System mit kontrolliertem Zugriff wie zum Beispiel einem Mautfernsehsystem oder einem Banksystem zu verwalten.

18. Verwendung gemäss Anspruch 17 für ein Mautfernsehsystem, dadurch gekennzeichnet, dass die benannten Daten zwischen zumindest einer Verwaltungseinheit (14) und den Speicherkarten (10) einem von zumindest einer Verwaltungseinheit (14) bis zu den Speicherkarten (10) einseitig gerichteten Fluss zufolge übermittelt werden.

19. Verwendung gemäss Anspruch 17 für ein Banksystem, dadurch gekennzeichnet, dass zumindest zwei verschiedene Verwaltungseinheiten (14) vorgesehen sind und die benannten Daten zwischen den Verwaltungseinheiten (14) und den Speicherkarten (10) einem zweiseitig gerichteten Fluss zufolge übermittelt werden.

20. Verwendung gemäss Anspruch 19, dadurch gekennzeichnet, dass bestimmte Daten bei einer ersten Verbindung einer Speicherkarte mit einer ersten Verwaltungseinheit von dieser bis zu dieser Speicherkarte und dann bei einer weiteren gleichzeitigen oder nachfolgenden Verbindung einer Speicherkarte mit einer anderen Verwaltungseinheit von dieser Speicherkarte bis zu dieser anderen Verwaltungseinheit übermittelt werden.

**Claims**

1. A system for processing the storage of data and for carrying out specific programmes, the system comprising:

   - at least one data administration and processing unit (14),
   - a plurality of memory cards (10) each comprising a writeable memory (28-Z2) for storing at least some of said instructions (A1,A2,... An), and a memory (Z1) for storing at least one specific programme (PS-1,PS-2,PS-3), and
   - at least one data communication means (12) for communicating data between at least one processing unit (14) and each memory card (10), in order to transmit a given number of instructions (A1,A2,... An) to be stored or to be used in a memory card (10) when this card is connected to a processing unit,

   characterized in that :

   - each memory card (10) connected at any instant to at least one processing unit (14) via a communication means (12) includes in said writeable memory (28) a set of data constituted by storing at any locations (Z2) whatsoever successive data received from the processing unit (14) or from several processing units (14), the set of data (A1,A2,... An) comprising logical links connecting stored data or enabling the setting up of links between the stored data, whatever may be the data storage location or their order of inputting, and possibly also linking with other data, thus constituting within the card (10) a relational database, while the set of cards connected simultaneously also constitutes a relational database and said specific programme (PS-1,PS-2,PS-3) being arranged to go through and inspect the entire set of data (A1,A2,...,An) of the relational database constituted within the card (10) so as to carry out at least one specific operation with data interconnected by at least one logical link.

2. A system according to claim 1, characterized in that :

   - the relational database within the card is constituted, on the one hand, of data (A1,A2,A3) pre-stored in the writeable memory (28) and, on the other hand, of data (A4,A5,A6) received from one or more data administration and processing units (14),
   - the logic links of said relational database constituted within the card being contained either in pre-stored data, or in received data, or both, so that the or each specific programme (PS-1,PS,2,PS-3) can only perform a specific operation when the relational database has been constituted within the card (10) by said connection.

3. A system according to claim 1 or 2, characterized in that :

   - each of said memory cards (10) comprises a means (24) for controlling the writeable memory (28) which is arranged so that when the memory card (10) is connected to at least one processing unit (14), it performs the following operations:

     -- control of the writeable memory (28) so as to store each input instruction (A1,A2,...,An) coming from the processing unit (14) in any locations whatsoever in the memory,
     -- a preliminary search upon inputting of a said instruction (A1,A2,...,An) to determine whether or not this input instruction is already stored in the writeable memory (28), and storage of this input instruction in any location whatsoever of the writeable memory only if this input instruction is not already stored in the writeable memory,

   - each said instruction (A1,A2,...,An) is made up of :

     -- either at least one digital data,
     -- or a logical linking data which enables a logical link to be established between at least two other instructions or at least between the present instruction and at least one other instruction,
     -- or a combination of such a logical linking data with at least one digital data,

- and the memory card (10) includes means for controlling the performance of at least one specific programme (PS-1,PS-2,PS-3) stored in the memory card, using for this purpose at least one logic set constituted by all of the instructions connected together by logical links, selected from amongst said instructions stored in the writeable memory of the memory card.

4. A system according to claim 2, characterized in that each said instruction (A1,A2,...,An) or part of an instruction related to a said logical link is an instruction or a part of an instruction which either is already stored in the memory card (10), or is to be stored later in the memory card.

5. A system according to claim 3, characterized in that each said instruction (A1,A2,...,An) stored in said writeable memory of the memory card is associated with one or more identification codes which enable said thus-constituted different logic set or sets to be identified later.

6. A system according to any preceding claim, characterized in that said at least one data communication means (12) allows transfer of data only in one direction, from a processing unit (14) to any memory card connected thereto.

7. A system according to claim 6, characterized in that the system is a restricted-access type system such as a pay-TV system in which :

   each memory card (10) is a card possessed by a subscriber to the system, which card is connectable to a decoder (16) of the system to allow the performance of a restricted-access function,
   said processing unit (14) is either a memory card administration service or is a station for transmitting a scrambled video signal, and
   said data communication means (12) communicates data by Herzian electromagnetic transmission, by satellite or by cable.

8. A system according to any preceding claim, characterized in that :

   said at least one processing unit (14) comprises periodicity-setting means which repeatedly sends a group of said instructions with a given periodicity via said at least one data communication means,
   in such a manner that all of the memory cards (10) which are connected simultaneously to at least one processing unit (14) at any given instant receive, in a time interval determined by said periodicity, said group of instructions, whereby all of the memory cards which are thus simultaneously connected (to a processing unit) constitute at said instant a relational database.

9. A method of administering and processing the storage of data and carrying out specific programs, the method comprising the following steps:

   - providing at least one data administration and processing unit (14),
   - providing a plurality of memory cards (10), and
   - providing at least one data communication means (12) for communicating data between at least one processing unit (14) and each memory card (10), and
   - transmitting a given number of instructions via one of said data communication means whereby these instructions are stored in a memory card (10) when this memory card is connected to a processing unit (14),

   the method being further characterized by the following steps :

   - storing at least some of said instructions (A1,A2,...,An) in a writeable memory (28) of each memory card, the set of stored data (A1,A2,... An) being constituted by storing at any locations (Z2) whatsoever successive data received by connecting the card (10), the set of data (A1,A2,...,An) comprising logical links connecting stored data or enabling the setting up of links between the stored data, whatever may be the data storage location or their order of inputting, and possibly also linking with other data, thus constituting within the card (10) a relational database, and
   - storing at least one said specific programme (PS-1,PS-2,PS-3) in a memory (Z1) of each memory card (10), said specific programme (PS-1,PS-2,PS-3) being arranged to go through and inspect the entire set of data (A1,A2,...,An) of the relational database constituted within the card (10) so as to carry out at least one specific operation with data interconnected by at least one logical link.

**10.** The method of claim 9, characterized in that it further comprises the following steps :

- providing in each of said memory cards (10) a means (24) for controlling the writeable memory (28) so that, when the memory card (10) is connected to at least one processing unit (14), it performs the following operations:

  -- control of the writeable memory (28) so as to store each input instruction coming from the processing unit (14) in any locations whatsoever in the memory,
  -- a preliminary search upon inputting of a said instruction (A1,A2,...,An) to determine whether or not this input instruction is already stored in the writeable memory (28), and storage of this input instruction in any location whatsoever of the writeable memory only if this input instruction is not already stored in the writeable memory,

- providing each said instruction (A1,A2,...,An) so it is made up of :

  -- either at least one digital data,
  -- or a logical linking data which enables a logical link to be established between at least two other instructions or at least between the present instruction and at least one other instruction,
  -- or a combination of such a logical linking data with at least one digital data,

- and controlling, in the memory card (10), the performance of at least one specific programme (PS-1,PS-2,PS-3) stored in the memory card, using for this purpose at least one logic set constituted by all of the instructions connected together by logical links, selected from amongst said instructions (A1,A2,...,An) stored in the writeable memory (28) of the memory card.

**11.** The method of claim 9 or 10, characterized in that said data (A1,A2,...,An) is transmitted between at least one processing unit (14) and the memory cards (10) with a one-way flux, from at least one processing unit to the memory cards.

**12.** The method of claim 9 or 10, characterized in that :

there are at least two different processing units (14),
said data is transmitted between the processing units (14) and the memory cards (10) with a two-way flux, and some data (A1,A2,...,An) is, during a first connection of a memory card with a first processing unit, transmitted from the first processing unit to this memory card and then, during another simultaneous or later connection of a memory card with another processing unit, transmitted from this memory card to this other processing unit.

**13.** A memory card (10) of the type including pay-TV cards, banking cards and other cards for restricted-access and like systems, comprising a writeable memory (28) storing a set of data (A1,A2,...,An) and at least one programme (PS-1,PS-2,PS-3) for performing specific operations on the stored data,
        characterized in that the stored set of data is constituted by storing, at any locations whatsoever, successive data received by connecting the card, via a data communication means (12), to one or more data administration and processing units (14) of one or more restricted-access systems or the like,

the set of data (A1,A2,...,An) comprising logical links connecting stored data or enabling the setting up of links between the stored data, whatever may be the data storage location or its order of inputting, and possibly also linking with other data, thus constituting within the card (10) a relational database,
said programme (PS-1,PS-2,PS-3) being arranged to go through and inspect the entire set of data (A1,A2,..., An) of the relational database constituted within the card (10) so as to carry out at least one specific operation with data interconnected by at least one logical link.

**14.** A memory card according to claim 13, characterized in that :

- the relational database is constituted, on the one hand, of data (A1,A2,A3) pre-stored in the writeable memory (28) and, on the other hand, of data (A4,A5,A6) received from one or more data administration and processing units (14),
- the logic links of the relational database being contained either in pre-stored data, or in received data, or both, so that the or each specific programme (PS-1,PS,2,PS-3) can only perform a specific operation when the relational database has been constituted within the card (10) by said connection.

15. A memory card according to claim 13 or 14, characterized in that it comprises a means (24) for controlling the writeable memory (28) which is arranged so that when the memory card (10) is connected to at least one processing unit (14), it performs the following operations:

   -- control of the writeable memory (28) so as to store each input instruction (A1,A2,... An) coming from the processing unit (14) in any locations (Z2) whatsoever in the memory,
   -- a preliminary search upon inputting of a said instruction to determine whether or not this input instruction is already stored in the writeable memory (28), and storage of this input instruction in any location (Z2) whatsoever of the writeable memory only if this input instruction is not already stored in the writeable memory.

16. A set of memory cards according to claim 14 or 15, characterized in that the set consisting of several memory cards (10) which are simultaneously connected at any instant to at least one processing unit (14) via a communication means (12) constitute at this instant a relational database.

17. Use of one or several memory cards according to claim 13, 14 or 15, or of a set of memory cards according to claim 16, to administer access to a controlled-access system such as a pay-TV system or a banking system.

18. Use according to claim 17 for a pay-TV system, characterized in that said data are transmitted between at least one administration and processing unit (14) and the memory cards (10) with a one-way flux from at least one administration and processing unit (14) to the memory cards (10).

19. Use according to claim 17 for a banking system, characterized in that at least two different administrative and processing units (14) are provided and said data are transmitted between the administrative and processing units (14) and the memory card (10) following a two-way flux.

20. Use according to claim 19, characterized in that certain data are transmitted, during a first connection of a memory card with a first administration and processing unit, from the latter to said memory card, then during another simulataneous or later connection with another administration and processing unit, are transmitted from said card to this other administration and processing unit.

*Fig. 1*

*Fig. 2*

*Fig. 3*

*Fig. 4*

*Fig. 5*

*Fig. 6*    *(ART ANTÉRIEUR)*

a ↓  b ↓  c ↓  d ↓

| M1 G1  F1<br>d=6 | M1 G1  F1<br>d=6<br>si G2→ G3 | M1 G1  F1<br>d=6<br>si G2→ G3<br>si F1→ F2 | M1 G1  F1<br>d=6<br>si G2→ G3<br>si F1→ F2<br>si pas G1→ d=d+3 |

| M2 G1  F1<br>G2  F2<br>d=6 | M2 G1  F1<br>G2  F2<br>d=6<br>si G2→ G3 | M2 G1  F1<br>G2  F2<br>d=6<br>si G2 → G3<br>si F1→ F2 | M2 G1  F1<br>G2  F2<br>d=6<br>si G2 → G3<br>si F1→ F2<br>si pas G1 > d=d+3 |

| M3  G1  F1<br>G2  F2<br>d=6 | M3  G1  F1<br>G2  F2<br>d=6<br>si G2→ G3 | M3  G1  F1<br>G2  F2<br>d=6<br>si G2→ G3<br>si F1→ F2 | M3  G1  F1<br>G2  F2<br>d=6<br>si G2→ G3<br>si F1→ F2<br>si pas G1 > d=d+3 |

| M4  G2  F2<br>d=6 | M4  G2  F2<br>d=6<br>si G2→ G3 | M4  G2  F2<br>d=6<br>si G2→ G3<br>si F1→ F2 | M4  G2  F2<br>d=6<br>si G2→ G3<br>si F1→ F2<br>si pas G1→ d=d+3 |

| M5 G3  F2<br>d=12 | M5 G3  F2<br>d=12<br>si G2→ G3 | M5 G3  F2<br>d=12<br>si G2→ G3<br>si F1→ F2 | M5 G3  F2<br>d=12<br>si G2→ G3<br>si F1→ F2<br>si pas G1→ d=d+3 |

*Fig. 7*

31